# EUROPEAN PATENT SPECIFICATION

(11) **EP 1 168 762 B1**
(45) Date of publication and mention of the grant of the patent: **16.07.2008**
(21) Application number: 01115401.0
(22) Date of filing: 26.06.2001
(51) Int. Cl.: H04L 29/06, G06Q 30/00, H04L 12/14

(54) **Information providing system**
Informationbereitstellungssystem
Système fournisseur d'informations

(30) Priority: 28.06.2000 JP 2000195023
(43) Date of publication of application: 02.01.2002
(73) Proprietor: Pioneer Corporation, Meguro-ku, Tokyo (JP)
(72) Inventor: Shioda, Takehiko, Tsurugashima-shi, Saitama 350-2288 (JP); Tanaka, Takuya, Tokyo (JP); Saito, Yukitaka, Tsurugashima-shi, Saitama 350-2288 (JP); Takahashi, Hiroyuki, Tsurugashima-shi, Saitama 350-2288 (JP)
(74) Representative: Manitz, Finsterwald & Partner GbR

(56) References cited:
- EP-A- 0 782 119
- EP-A- 0 848 526
- EP-A- 0 991 213
- US-A- 4 937 572
- US-A- 5 734 719
- US-A- 5 959 945
- US-A- 5 963 916
- US-A- 6 073 075

## Description

### BACKGROUND OF THE INVENTION

### Field of the Invention

The present invention relates to an information providing system for providing information over lines, circuits and networks such as the internet according to the preamble of claim 1.

An information presentation apparatus comprising the features of the preamble of claim 1 is known from EP-A-0 848 526.

### Description of the Related Art

A so-called e-commerce is now prevailing. It allows a client terminal device such as a personal computer to download an information file such as a music information file from a Web server over the internet, whereby various information including music (or musical pieces), images, pictures, programs, novels, etc. is bought and sold over the internet.

It is advantageous because a purchaser can immediately obtain desired information such as music without going to a store.

The size of the information file such as music and pictures is, however, as large as megabyte even after the file is compressed. A terminal device, therefore, requires a considerable amount of time to download the file. An additional time is further needed when the internet is crowded and/or a great amount of data or people access a server. As a result, a user may feel a stress during downloading or hesitate to purchase something by the time-consuming downloading.

### OBJECTS AND SUMMARY OF THE INVENTION

An object of the present invention is to provide an information providing system that requires less time in downloading information and has less chance in performing a wrong charging.

The system, apparatus and methods of the present invention are described in the claims.

### BRIEF DESCRIPTION OF THE DRAWINGS

Figure 1 is a block diagram illustrating a structure of an information providing system according to the present invention;
Figure 2 illustrates a part of a structure inside a user terminal device;
Figure 3 illustrates an omitting method for omitting some portions in music data of one-song-worth at constant intervals;
Figure 4 illustrates a structure of an incomplete music file;
Figure 5 illustrates a structure of a complementary music file;
Figure 6 illustrates a block diagram of a structure of a data separation device;
Figure 7 is a flowchart illustrating a data separating operation performed by a control circuit of the data separation device shown in Figure 6;
Figure 8 is a sequence diagram illustrating an operation of the information providing system shown in Figure 1;
Figure 9 illustrates contents stored in a database created in an information administration server;
Figure 10 is a flowchart illustrating a combine operation;
Figure 11 is a flowchart illustrating another combine operation suited when a plurality of songs are selected;
Figure 12 is an omitting method for omitting some portions in the music data of one-song-worth at random intervals;
Figure 13 is a block diagram showing a structure of another data separation device;
Figure 14 shows a random number-M-N table;
Figure 15 is a flowchart showing a data separating operation performed by a control circuit of the data separation device shown in Figure 13;
Figure 16 is a flowchart showing a combine operation applicable to a random number scheme;
Figure 17 illustrates a complementary music file table;
Figure 18 illustrates another complementary music file table;
Figure 19 depicts a random number form data table;
Figure 20 illustrates a structure of music data of TwinVQ scheme;
Figure 21 is a flowchart illustrating a data separating operation carried out by the control circuit when the music data is TwinVQ scheme data;
Figure 22 illustrates a structure of music data of ACC scheme;
Figure 23 illustrates a structure of music data of MP3 scheme;
Figure 24 is a flowchart illustrating a combine operation in case of TwinVQ music data;
Figure 25 is a sequence diagram illustrating another example of an operation carried out by the information providing system shown in Figure 1;
Figure 26 is a sequence diagram illustrating still another example of an operation carried out by the information providing system shown in Figure 1;
Figure 27 is a sequence diagram illustrating yet another example of an operation carried out by the information providing system shown in Figure 1;
Figure 28 is a block diagram illustrating a structure of an information providing system having a kiosk terminal device according to the present invention;
Figure 29 is a block diagram illustrating a structure of a cellar telephone;
Figure 30 is a block diagram illustrating a structure of the kiosk terminal device;
Figure 31 is a flowchart illustrating an operation of a control circuit of the kiosk terminal device;
Figure 32 is a sequence diagram illustrating an operation of the information providing system shown in Figure 28;
Figure 33 is a block diagram illustrating a structure of another kiosk terminal device;
Figure 34 is a sequence diagram illustrating an operation of the information providing system shown in Figure 28 that uses the kiosk terminal device of Figure 33;
Figure 35 depicts a structure of a navigation system;
Figure 36 depicts a structure of a navigation device in the system shown in Figure 35;
Figure 37 depicts a map data structure;
Figure 38 depicts a concrete structure of a data administrating portion and a data portion in the map data;
Figure 39 depicts relationship between meshes and mesh numbers;
Figure 40 depicts relationship between the mesh numbers and map data addresses;
Figure 41 illustrates a sequence diagram of an operation of the navigation system;
Figure 42 illustrates a sequence diagram of another operation of the navigation system;
Figure 43 illustrates a sequence diagram of still another operation of the navigation system; and
Figure 44 illustrates a sequence diagram of yet another operation of the navigation system.

### DETAILED DESCRIPTION OF THE EMBODIMENTS

Embodiments of the present invention will now be described in detail in reference to the accompanying drawings.

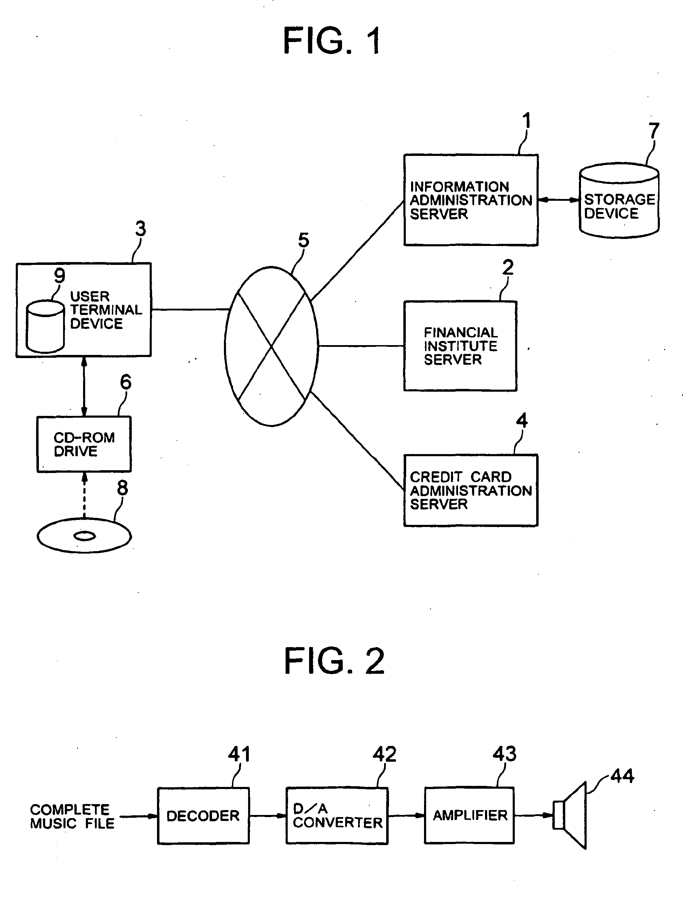

Referring to Figure 1, illustrated is a fundamental structure of an information providing system of the present invention.

The illustrated information providing system includes an information administration server 1, a financial institute server 2, a user terminal device 3 and a credit card administration server 4. The information administration server 1, financial institute server 2, user terminal device 3 and credit card administration server 4 are connected to the internet 5. It should be noted that the information administration server 1 may be connected to the financial institute server 2 and/or the credit card administration server 4 by dedicated lines instead of the internet 5.

The information administration server 1 is located in an information administration center of an e-commerce enterprise, and is a server for providing the user terminal device 3 with music information (will be described in detail). The information administration server 1 has a storage device 7 as a database. Although this embodiment only deals with music information providing, the present invention is of course applicable when providing other information such as image information, picture information and atlas data information.

The financial institute server 2 is a server located in a bank, and functions as a server for cooperation money treatment (will be described) in response to instructions from the information administration server 1. The credit card administration server 4 is a server situated in a credit card company, and conducts charging in response to instructions from the information administration server 1.

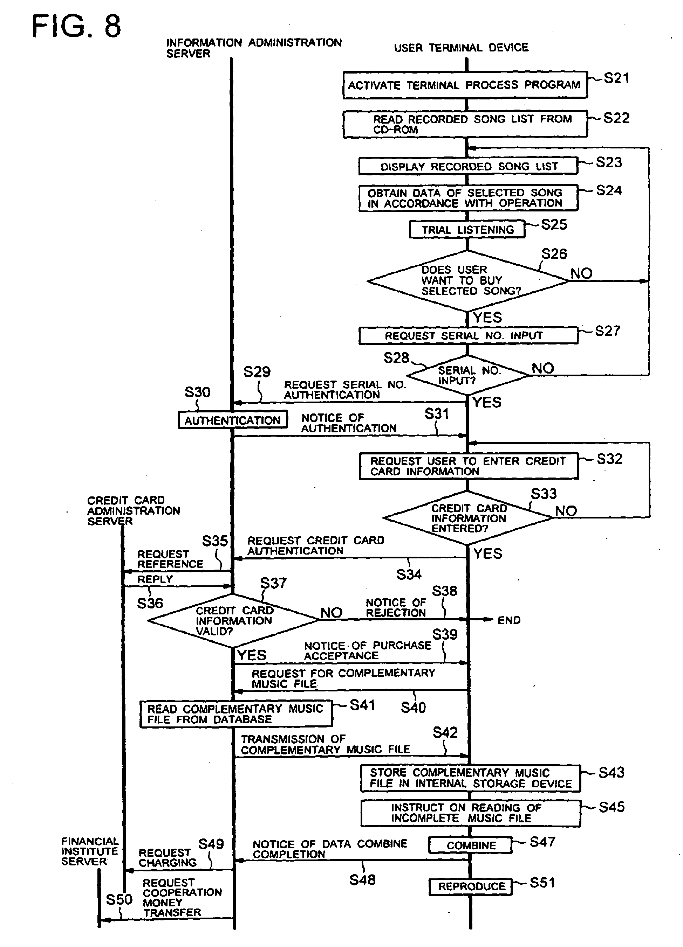

The user terminal device 3 is operated by a user who wants to have music delivered. For the sake of clarity and easier understanding of the invention, there is only one user terminal device in this embodiment, but in reality a plurality of terminal devices are connected to the internet 5. The user terminal device 3 is a personal computer and equipped with a CD-ROM drive 6. CD-ROM 8 is put on a tray and inserted into the CD-ROM drive 6 of the user terminal device 3. The user terminal device 3 executes a program written in the CD-ROM 8 as it reads the CD-ROM 8. This program is a program that enables the terminal device 3 to communicate with the information administration server 1 and reproduce desired music. Specifically, this program is a program for the terminal device 3 to execute a procedure after Step S22 shown in Figure 8 (will be described). It should be noted that the program may be stored in a storage device such as a hard disc of the terminal device 3, and executed upon an operation made by a user.

It should also be noted that the CD-ROM 8 may be replaced with other storage medium such as DVD-ROM. The storage medium is not limited to the disc; it may be a tape storage medium, a card storage medium, a solid-state memory or the like.

Referring to Figure 2, the user terminal device 3 includes a decoder 41 for decoding a complete music file, a D/A converter 42 for converting an output digital signal of the decoder 41 to an analog audio signal, and an amplifier 43 for amplifying the output audio signal of the D/A converter 42 to drive a speaker 44. The decoder 41 expands a compressed music data, and may be either a hardware element or a software or program executed for that purpose.

The CD-ROM 8 is, for example, a supplement to a magazine, or the one distributed free or at a very low price. A card having a serial number is attached to the CD-ROM 8 when distributed. It is therefore possible to identify a distribution source and a kind of the disc (recorded contents) from the serial number. The distribution source is an organization such as a store or magazine company that distributes CD-ROMs upon a request from the e-commerce enterprise. The serial number may be recorded on the CD-ROM 8 or printed on a print surface (or a label surface) of the CD-ROM 8. Recordation of the serial number onto the CD-ROM 8 is automatically made when data such as music data is recorded.

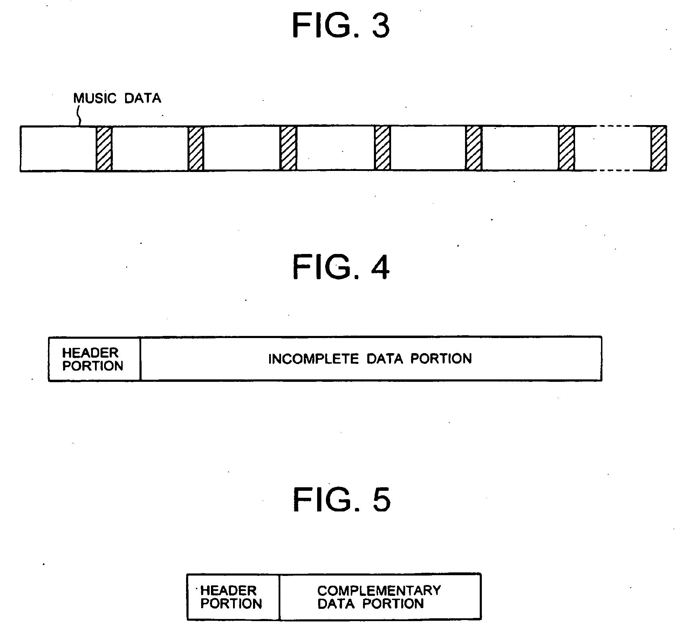

The music data is incompletely recorded on the CD-ROM 8. The way of incompletely recording music is, for example as shown in Figure 3, a simple skipping scheme which misses out some data in the music data at predetermined intervals. The shaded areas indicate the canceled data portions in Figure 3. The remaining data portions constitute the incomplete music data, and the canceled data portions are complementary (or supplemental) music data.

The incomplete music data comprised of a plurality of files is stored in the CD-ROM 8 in a format shown in Figure 4. Specifically, each file includes a header portion and an incomplete data portion, and the CD-ROM 8 stores a plurality of such files as the incomplete music files, the number of which is the number of songs. The header portion includes information such as the way of making the music data incomplete (simple skipping scheme), a file name of each of the incomplete music files and complementary music files, and a block size of each of the incomplete data portions and complementary data portions.

The database in the storage device 7 stores the complementary music data in the form of a plurality of files, each having a structure shown in Figure 5. Specifically, each complementary music file includes a header portion and a complementary data portion, and the database stores a plurality of such files, the number of which is the number of songs. Like the header portion of the incomplete music file, this header portion includes information such as the way of making the music data incomplete (simple skipping), a file name of each of the incomplete and complementary music files, and a block size of each of the incomplete and complementary data portions.

A structure and an operation of an apparatus for dividing the music data into the incomplete music files and complementary music files will be described below.

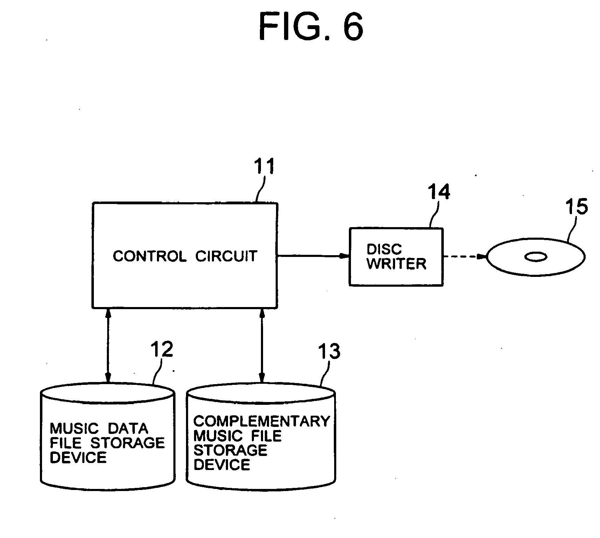

Referring to Figure 6, the data dividing apparatus includes a control circuit 11, a music data file storage device 12, a complementary music file storage device13 and a disc writer 14. The music data file storage device 12 stores a plurality of complete music files before divided. The complete music data may be a PCM digital data, and is a compressed data in this embodiment. The compressed data is prepared by a voice compression method such as an MP3 (MPEG-1/Audio Layer 3) method, an AAC (MPEG-2/Advanced Audio Coding (ISO/IEC Standard 13818-7)) method, and an ATRAC (Adaptive Transform Acoustic Coding) 3 method. The decoder 41 can decode this compressed music data.

The complementary music file storage device 13 is a unit for storing the divided complementary music files. The disc writer 14 is a write device for creating the incomplete music files on a writable disc 15 such as CD-R.

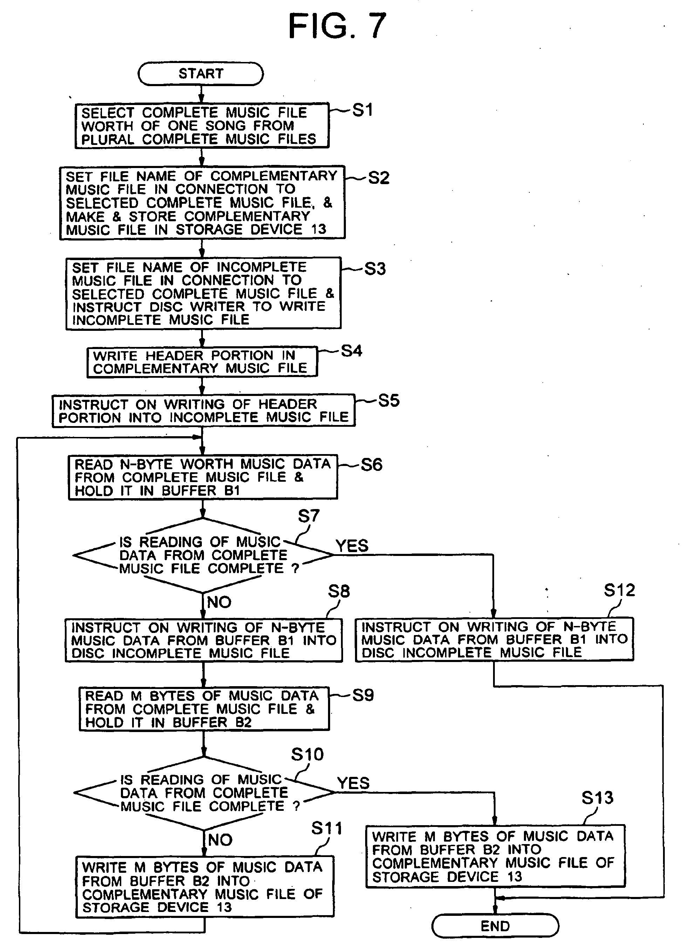

The control circuit 11 first selects a complete music file worth of one song from a plurality of complete music data files stored in the music data file storage unit 12 as shown in Step S1 of Figure 7. The control circuit 11 then sets a file name of a complementary music file in association with the selected complete music file to make and store the complementary music file in the complementary music file storage unit 13 (Step S2). Likewise, the control circuit 11 sets a file name of the incomplete music file in association with the selected complete music file, and instructs the disc writer 14 to write the incomplete music file (Step S3). The disc writer 14 creates the incomplete music file and writes it on the disc 15 in response to the write command. The selected complete music file is referred to as Fcom, the corresponding incomplete music file is Fincom, and the associated complementary or supplemental music file is Fsup in the following description.

The control circuit 11 prepares a header portion of the complementary music file Fsup associated with the complete music file Fcom and writes it into the complementary music file Fsup of the complementary music file storage unit 13 (Step S4). The control circuit 11 also prepares a header portion of the incomplete music file Fincom associated with the complete music file Fcom and instructs the disc writer 14 to write this header portion additionally into the incomplete music file Fincom (Step S5). Upon receiving the write instructions, the disc writer 14 writes the additional header portion in the incomplete music file Fincom of the disc 15.

The control circuit 11 reads N-byte-worth music data from the complete music file Fcom selected from the music data file storage unit 12, maintains it in an internal buffer B1 (not shown) (Step S6), and determines whether the reading from the complete music file Fcom is complete (Step S7). If the music data equal to or less than N bytes remains in the complete music file Fcom after reading the N-byte-worth data, the control circuit 11 also reads the remaining data at Step S6. In such a case, or if there is no music data left upon completion of the N-byte reading operation at Step S6, it is recognized at Step S7 that the reading of the complete music file Fcom is complete.

If the complete music file Fcom has not read completely at Step S7, the control circuit 11 instructs the disc writer 14 to write the N-byte-worth music data held in the internal buffer B1 into an incomplete data portion of the incomplete music file Fincom (Step S8). Accordingly, the disc writer 14 writes the N-byte-worth music data into the incomplete data portion of the incomplete music file Fincom of the disc 15 in response to the write instructions.

After Step S8, the control circuit 11 reads music data of M bytes worth from the complete music file Fcom selected from the music data file storage unit 12 and stores it in an internal buffer B2 (not shown) (Step S9). The control circuit 11 determines whether the reading from the complete music file Fcom is complete or not (Step S10). If the music data equal to or less than M bytes remains in the complete music file Fcom after reading the M-byte-worth data, the control circuit 11 reads both the M bytes of data and the remaining data at Step S9. If it is the case, or if there is no music data left upon completion of the M-byte-data reading operation at Step S9, then it is recognized at Step S10 that the reading of the complete music file Fcom is complete. Here, the relationship of N >> M holds true. This is necessary to reduce the size of the complementary music file Fsup to be transmitted. It should be noted, however, that the relationship of N >> M does not necessarily hold true; for example, it may be N > M, or N = M to maintain a copyright.

If the complete music file Fcom has not been read entirely at Step S10, the control circuit 11 writes the M bytes of music data stored in the internal buffer B2 into a complementary data portion of the complementary music file Fsup of the complementary music file storage device 13 (Step S11). The program returns to Step S6 after Step S11 so as to repeat the above described operation.

When the control circuit 11 determines at Step S7 that the complete music file Fcom has been read completely, it instructs the disc writer 14 to write the music data equal to or less than N bytes stored in the internal buffer B1 into an incomplete data portion of the incomplete music file Fincom (Step S12). As a result, the disc writer 14 writes the music data not greater than N bytes into the incomplete data portion of the incomplete music file Fincom of the disc 15 in accordance with the write instructions. Consequently, a single incomplete music file Fincom is created in the disc 15.

When the control circuit 11 determines at Step S10 that the complete music file Fcom has been read completely, it writes the music data not greater than M bytes stored in the internal buffer B2 into a complementary data portion of the complementary music file Fsup inside the complementary music file storage device 13 (Step S13). By executing Step S13, a single complementary music file Fsup is prepared in the complementary music file storage device 13.

The above described operation of the data separation device is repeated the number of times equal to the number of the songs to be recorded on the disc 15. After the writing of the incomplete music file into the disc 15 is repeated the number of times equal to the number of the songs, a file data representing a list of titles of the recorded songs is written into the disc 15 for the recorded incomplete music files. A process program for the terminal device is also written into the disc 15. This program controls the operation of the terminal device 3, e.g., downloading of the complementary music file and data combination (will be described). Upon completing the writing operation onto the disc 15, a plurality of CD-ROMs will be reproduced using the disc 15 as a master disc. One of the reproduced CD-ROMs is the CD-ROM 8 mentioned above.

An operation of the above described information providing system will now be described.

As the CD-ROM 8 is placed on the tray (not shown) of the CD-ROM drive 6 of the user terminal device 3, inserted into the CD-ROM drive 6 together with the tray and the CD-ROM 8 is read, the terminal device 3 then starts its operation.

As illustrated in Figure 8, the user terminal device 3 first executes the terminal process program written in the CD-ROM 8 (Step S21). The terminal device 3 retrieves the list of the recorded songs from the CD-ROM 8 when it executes the terminal process program (Step S22). Specifically, the CD-ROM drive 6 reads the list of the recorded songs (i.e., the recorded song list file) from the CD-ROM 8 and feeds it to the terminal device 3. The user terminal device 3 then causes a display unit (not shown) to display the recorded song list, which is supplied from the CD-ROM drive 6, in a display screen in the form of a list (Step S23). The user operates certain keys of the terminal device 3 or a mouse in order to select a song, which the user wants to listen to, from the displayed list of the recorded songs. The terminal device 3 obtains a data representing the song selected by the user's operating the keys or mouse (Step S24) and starts a trial listening operation to the selected song data (Step S25).

The user terminal device 3 retrieves an incomplete music file corresponding to the selected song data from the CD-ROM 8 via the CD-ROM drive 6 during the trail listening, and causes the CD-ROM drive 6 to read first N bytes of music data from the data portion of the retrieved incomplete music file, and to feed it to the decoder 41. The decoder 41 then decodes the supplied N bytes of music data successively and sends the resulting PCM audio signal to the D/A converter 42. Since the analog audio signal produced by the D/A converter 42 is introduced to the speaker 44 through the amplifier 43, the user is able to listen to the selected song for a predetermined period. It should be noted that the CD-ROM 8 may have been recorded music data for the trial listening beforehand for each of the songs, and such music data may be taken out for the trail listening. For example, each song may be recorded on the CD-ROM 8 as the complete music data, but with first some tens of seconds of music data being only recorded in a complete form.

After Step S25, it is determined whether the user wants to buy the selected song, i.e., the song listened to for the trial (Step S26). When the user decides to buy the song or not to buy, the user conducts a particular operation. For instance, the display shows a button for YES and a button for NO to buy or decline the song, and the user selects one of these buttons by operating the mouse (not shown). If the user decides not to buy this song, the program returns to Step S23 such that the user can select another song.

When the user wants to buy another song(s), the program also returns to Step S23 such that the user can find out a next song.

If the user wants to purchase a song, the user terminal device 3 utilizes the display screen to request the user to input a serial number (Step S27). The serial number is written on a card distributed together with the CD-ROM 8 as mentioned above. It is then determined whether the serial number is entered (Step S28). If the serial number is entered, the user terminal device 3 sends a request to the information administration server 1 for authentication of the serial number just entered (Step S29). This authentication request is accompanied with the entered serial number. If the serial number is recorded on the CD-ROM 8, the user terminal device 3 may automatically read out it and request the information administration server 1 to authenticate the serial number.

Upon receiving the request for the serial number authentication, the information administration server 1 uses the database created in the storage device 7 to authenticate the serial number (Step S30).

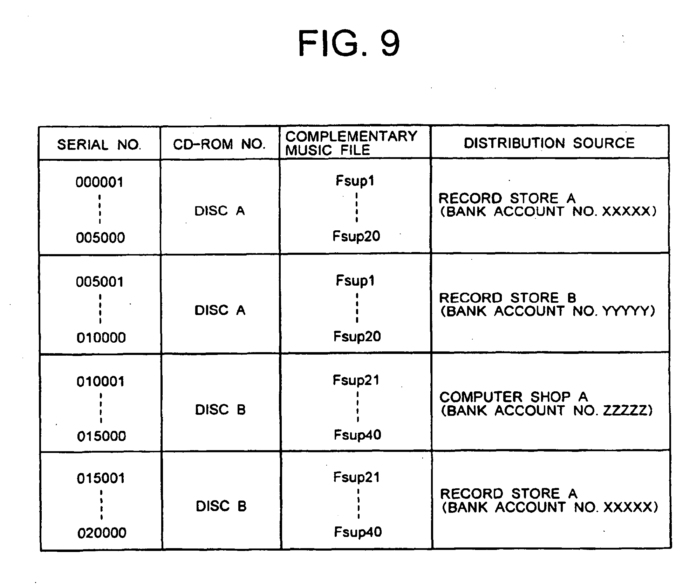

The complementary music files are stored in the database of the storage device 7 as described above. As illustrated in Figure 9, the serial numbers, CD-ROM numbers, groups of complementary music files recorded on the respective CD-ROMs, and distribution sources (including bank account numbers) are associated with each other in the database. As the serial number is obtained from the received authentication request, it is possible to identify a CD-ROM corresponding to that serial number. It is further possible to identify a distribution source of the CD-ROM.

The information administration server 1 determines at Step S30 whether the serial number obtained from the authentication request exists in the database. If the information administration server 1 confirms the presence of that serial number, it sends a notice of authentication to the terminal device 3 (Step S31).

The user terminal device 3 requests, on its display screen, the user to enter credit card information in response to the notice of authentication (Step S32). The credit card information may include a credit card number, a card holder name and an expiration date. If this system accepts a plurality of credit card companies, the credit card information may further include indication of a credit card company which the user uses now. It is then determined whether the credit card information is entered (Step S33). If the answer is yes, the user terminal device sends a request to the information administration server 1 for authentication of the credit card information (Step S34). The authentication request is accompanied with the entered credit card information.

As the information administration server 1 receives the request for the credit card information authentication, it sends a request for reference to the credit card administration server 4 in order to confirm the received credit card information (Step S35).

The credit card administration server 4 refers to a database (not shown) to determine validity/invalidity of the credit card information in response to the reference request, and sends a reply to the information administration server 1 (Step S36).

The information administration server 1 determines whether the credit card information is valid or not on the basis of the response from the credit card administration server 4 (Step S37). When the information administration server 1 determines that the credit card information is invalid, it sends a notice of refusal to the terminal device 3 (Step S38). This is the refusal of communication from the terminal device 3 to the information administration server 1 so that the purchase of the selected song becomes impossible.

If the information administration server 1 determines at Step S37 that the credit card information is valid, it transmits a notice of purchase acceptance to the terminal device 3 (Step S39).

Upon receiving this acceptance notice from the information administration server 1, the terminal device 3 requests the information administration server 1 to send the complementary music file of the selected song (Step S40). The request for the complementary music file includes a file name of the complementary music file that makes a pair with the incomplete music file on the CD-ROM 8 of the selected song.

As the information administration server 1 receives the request for the complementary music file, it retrieves a complementary music file, which has the same file name as included in the complementary music file request, from the database using the CD-ROM number specified by the already received serial number, and supplies it to a buffer (Step S41). The information administration server 1 then transmits the retrieved complementary music file to the terminal device 3 (Step S42). If a plurality of selected songs are bought, complementary music files for these songs are taken out and sent to the terminal device 3 at Steps S41 and 42

The terminal device 3 receives the complementary music file and temporarily stores it in the internal storage device 9 (Step S43). Upon successful receiving and storing of the complementary music file, the terminal device 3 instructs the CD-ROM drive 6 to read the incomplete music file of the selected song (Step S45). The CD-ROM drive 6 reads the incomplete music file of the selected song from the CD-ROM 8 on the basis of the file name information of the CD-ROM 8, and supplies it to the terminal device 3. The terminal device 3 then combines the incomplete music file data with the complementary music file data to create a complete music file (Step S47). This combine operation will be described in detail below.

When the combine operation ends, the terminal device 3 sends a notice of data combine completion to the information administration server 1 (Step S48).

As the information administration server 1 receives the notice of data combine completion, it requests the credit card administration server 4 to start a charging operation on the basis of the already received credit card information (Step S49). The information administration server 1 also requests the financial institute server 2 to transfer a cooperation money to a bank account of a financial institute of a distribution source identified by the serial number (Step S50). Since the bank account number of the distribution source's bank is stored in the database of the storage device 7 as shown in Figure 9, the information administration server 1 obtains the band account number from the database and requests the cooperation money transfer.

The credit card administration server 4 carries out the charging operation on the basis of the credit card information. In the meantime, the financial institute server 2 transfers the cooperation money to the bank account of the distribution source. Accordingly, the CD-ROM manufacturing enterprise has sold a song, which is included in the CD-ROM 8 as the incomplete music file, to the user in a perfectly reproducible manner. The cooperation money is paid as a distribution commission to the distribution source such as a retail store that has actually distributed the CD-ROM 8.

It should be noted that the charge request at Step S49 may be made immediately after completion of Step S42, i.e., after the complementary music file transmission to the terminal device 3 is complete.

When the combine operation is finished, the terminal device 3 starts a reproducing operation (Step S51). The reproducing operation supplies the complete music file prepared by the combining operation to the decoder 41. The decoder 41 decodes the music data to feed the PCM audio signal to the D/A converter 42. Since the analog audio signal from the D/A converter 42 is introduced to the speaker 44 through the amplifier 43, the user can perfectly listen to the song, which he or she bought. When the combine operation is complete, a play button may be displayed on the display screen and the song may be reproduced as the user clicks the play button with the mouse.

Although the request for the complementary music file to the song which the user has listened to for the trial is sent to the information administration server 1 in this embodiment, it is also satisfactory that the request for the complementary music file of the song selected from the list of the recorded songs is transmitted to the information administration server 1 without giving the user a chance of listening to the song for the trial purpose. In such a case, the program skips to Step S27 after Step S24 in the flowchart of Figure 8. If the user listens to a plurality of songs for the trial, a request for the complementary music files for some of these songs that the user wants to purchase may be sent to the information administration server 1.

The combine operation will now be described. For easier understanding, the complementary music file stored in the internal storage device 9 at Step S43 is referred to as Fsup, the incomplete music file read out from the CD-ROM 8 upon the command at Step S45 is referred to as Fincom, and the complete music file created by the combine operation is referred to as Fcom in the following description.

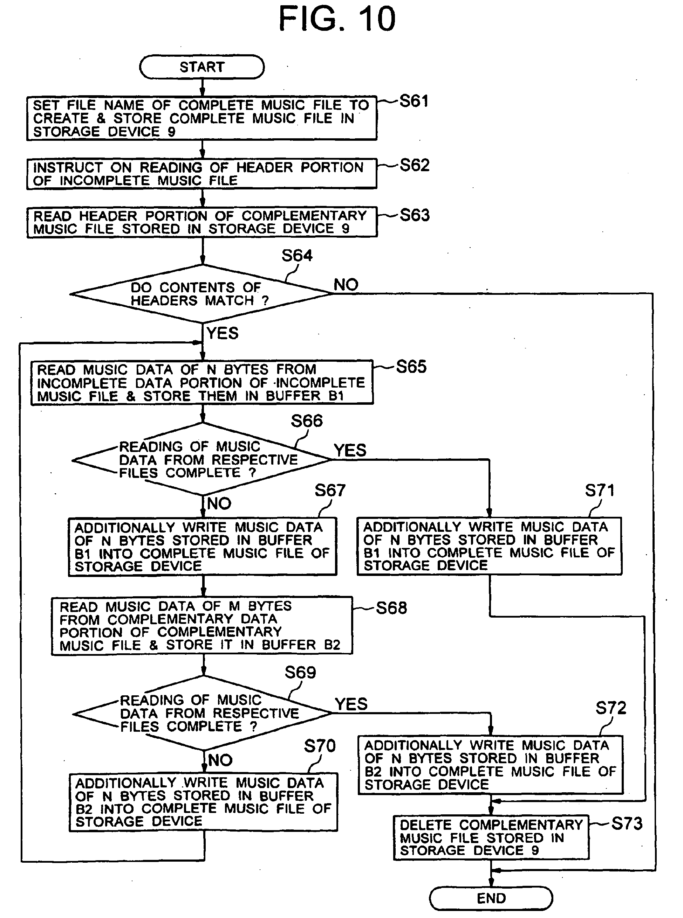

Referring to Figure 10, the terminal device 3 first sets the file name of the complete music file Fcom to create and store the complete music file in the internal storage device 9 (Step S61). The terminal device then instructs the CD-ROM drive 6 to read the header portion of the incomplete music file Fincom stored in the CD-ROM 8 (Step S62). The CD-ROM drive 6 reads the header portion of the incomplete music file Fincom in response to the read instruction, and feeds it to the terminal device 3. The terminal device 3, on the other hand, reads the header portion of the complementary music file Fsup stored in the internal storage device 9 (Step S63). It is then determined whether the header portion of the incomplete music file Fincom matches the header portion of the complementary music file Fsup (Step S64). Specifically, it is determined if there is no discrepancy in various information such as the way of partly omitting the music data, the file names of the incomplete and complementary music files and the block sizes of the incomplete and complementary data portions. If the matching cannot be confirmed in the predetermined aspects of the header portions of the files Fincom and Fsup at Step S64, it is determined that one of these files contains an error, and the combine operation is discontinued.

When the matching between the two files Fincom and Fsup is confirmed at Step S46, it means that the incomplete music file Fincom and complementary music file Fsup are derived from the same complete music file. The music data of N bytes are sequentially read out from the incomplete data portion of the incomplete music file Fincom and stored in the internal buffer B1 (Step S65). It is then determined whether the data portions of both the files Fincom and Fsup are finished by this reading operation applied to the incomplete data portions of the incomplete music file Fincom (Step S66). If data remains less than N bytes upon reading of the incomplete data portion of the incomplete music file Fincom at Step S66, it is read together with the music data of N bytes.

When it is determined at Step S66 that the reading is not complete, the music data of N bytes held in the internal buffer B1 is added to the complete music file Fcom inside the internal storage device 9 (Step S67). The music data of M bytes are then read out successively from the complementary data portion of the complementary music file Fsup and stored in the internal buffer B2 (Step S68). It is then determined whether the data portions of the files Fincom and Fsup have been read by this reading operation applied to the complementary data portion of the complementary music file Fsup (Step S69). If data remains less than M bytes upon reading of the complementary data portion of the complementary music file Fsup at Step S68, it is read together with the music data of M bytes.

If the reading is not complete at Step S69, the music data of M bytes held in the internal buffer B2 is written into the complete music file Fcom inside the internal storage device 9 (Step S70). The program returns to Step S65 after Step S70 to repeat the above described procedure.

If it is determined at Step S66 that the incomplete data portion of the incomplete music file Fincom has been completely read, the music data not greater than N bytes stored in the internal buffer B1 is additionally written into the complete music file Fcom of the internal storage device 9 (Step S71). This creates the complete music file Fcom of the selected song in the internal storage device 9.

When it is determined at Step S69 that the complementary data portion of the complementary music file Fsup has been read entirely, the music data not greater than M bytes stored in the inside buffer B2 is additionally written into the complete music file Fcom of the inside storage device 9 (Step S72). This creates the complete music file Fcom of the selected song in the storage device 9.

After Step S71 or S72, the complementary music file Fsup is deleted from the storage device 9 (Step S73). The reason why the complementary music file is deleted at Step S73 is because it is necessary to prevent an illegal combine operation from occurring by use of the complementary music file remained in the storage device 9.

Although the complementary music file Fsup is received to create the complete music file Fcom at the terminal device 3 for a single selected song in the above described combine operation, it is also feasible that a plurality of songs are selected and complementary music files for these songs are received to prepare complete music files for the respective songs at the terminal device 3.

The combine operation for a plurality of selected songs will be described below. For the sake of clarity, complementary music files for a plurality of selected songs (Y in number) are in the internal storage device 9 at Step S43, these Y complementary music files are referred to as Fsup1 to FsupY, incomplete music files read out from the CD-ROM 8 upon the instructions at Step S45 are referred to as Fincom1 to FincomY, and complete music files formed by the combine operation are referred to as Fcom1 to FcomY.

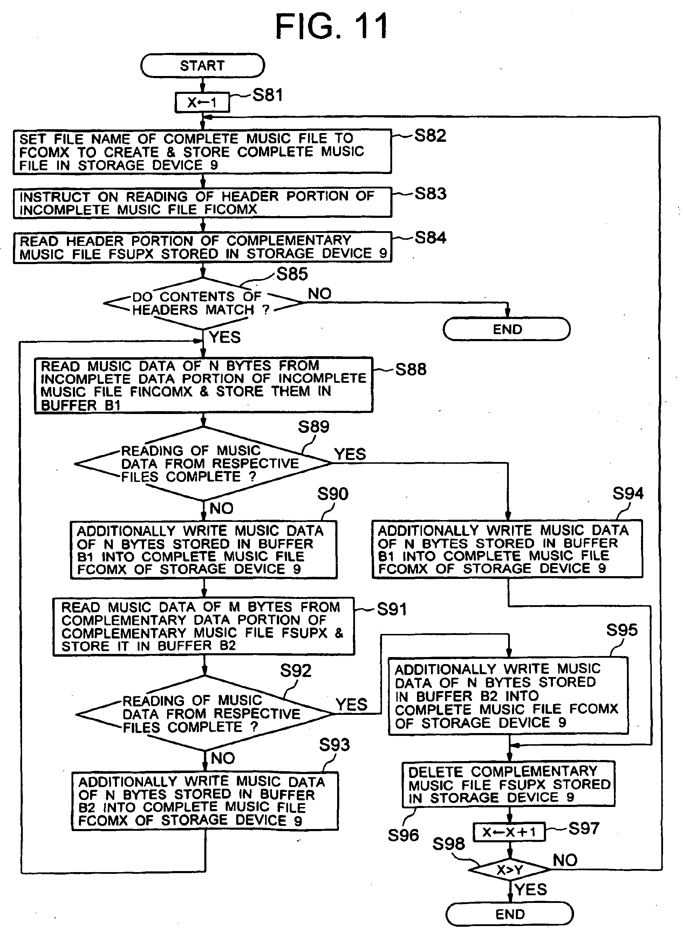

Referring to Figure 11, the terminal device 3 first sets that a variable X = 1 (Step S81), and enters a file name of the complete music file FcomX to create and store the complete music file in the internal storage device 9 (Step S82). The terminal device 3 then instructs the CD-ROM drive 6 to read the header portion of the incomplete music file FincomX stored in the CD-ROM 8 (Step S83). Upon the instructions, the CD-ROM drive 6 reads the header portion of the incomplete music file FincomX and supplies it to the terminal device 3. In the meantime, the terminal device 3 reads the header portion of the complementary music file FsupX stored in the internal storage device 9 (Step S84). It is then determined whether the header portion of the incomplete music file FincomX corresponds to that of the complementary music file FsupX (Step S85). Specifically, it is determined whether various information such as the way of partly omitting the music data, the file names of the incomplete and complementary music files and the block sizes of the incomplete and complementary data portions are equal to each other. If matching between the files FincomX and FsupX cannot be confirmed in the predetermined aspects of the header portions at Step S85, it is determined that one of the files includes an error, and the combine operation is discontinued.

When the header portion information of the file FincomX matches that of the file FsupX at Step S85, it means that the incomplete music file FincomX and complementary music file FsupX have been separated from the same complete music file. The music data of N bytes are therefore successively read out from the incomplete data portion of the incomplete music file FincomX and stored in the internal buffer B1 (Step S88). It is then determined whether the data portions of the files FincomX and FsupX are both completely read by the reading operation just applied to the incomplete data portion of the incomplete music file FincomX (Step S89). If data remains less than N bytes after the incomplete data portion of the incomplete music file FincomX is read at Step S88, it is read together with the N bytes of music data.

When the reading is not complete at Step S89, the music data of N bytes stored in the internal buffer B1 is additionally written into the complete music file FcomX of the internal storage device 9 (Step S90). The music data of M bytes is further read from the complementary data portion of the complementary music file FsupX successively and stored in the internal buffer B2 (Step S91). It is then determined whether the data portions of the files FincomX and FsupX are both completely read by the reading operation just applied to the complementary data portion of the complementary music file FsupX (Step S92). If data remains less than M bytes after the complementary data portion of the complementary music file FsupX is read at Step S90, it is read together with the M bytes of music data.

When the reading is not complete at Step S92, the music data of M bytes stored in the internal buffer B2 is additionally written into the complete music file FcomX of the internal storage device 9 (Step S93). The program returns to Step S88 after Step S93 to repeat the above described procedure.

When it is determined at Step S89 that the incomplete data portion of the incomplete music file FincomX has been read entirely, the music data not greater than N bytes stored in the internal buffer B1 is additionally written into the complete music file FcomX of the internal storage device 9 (Step S94). Consequently, the complete music file FcomX of the selected song is formed in the internal storage device 9.

If it is determined at Step 92 that the complementary data portion of the complementary music file FsupX has been read entirely, the music data not greater than N bytes stored in the internal buffer B2 is additionally written into the complete music file FcomX of the internal storage device 9 (Step S95). The complete music file FcomX of the selected song is therefore formed in the internal storage device 9.

The complementary music file FsupX is deleted from the internal storage device 9 after Step S94 or S95 (Step S96).

After the deletion of the complementary music file FsupX at Step S96, one is added to the variable X (Step S97). It is subsequently determined whether the variable X is greater than a variable Y (Step S98). If X ≦ Y, the program returns to Step S82 to repeat the above described procedure. If, on the other hand, X > Y, it means that the Y complete music files Fcom1 to FcomY, which the user has decided to purchase, are formed in the internal storage device 9. A series of combine operations are therefore complete.

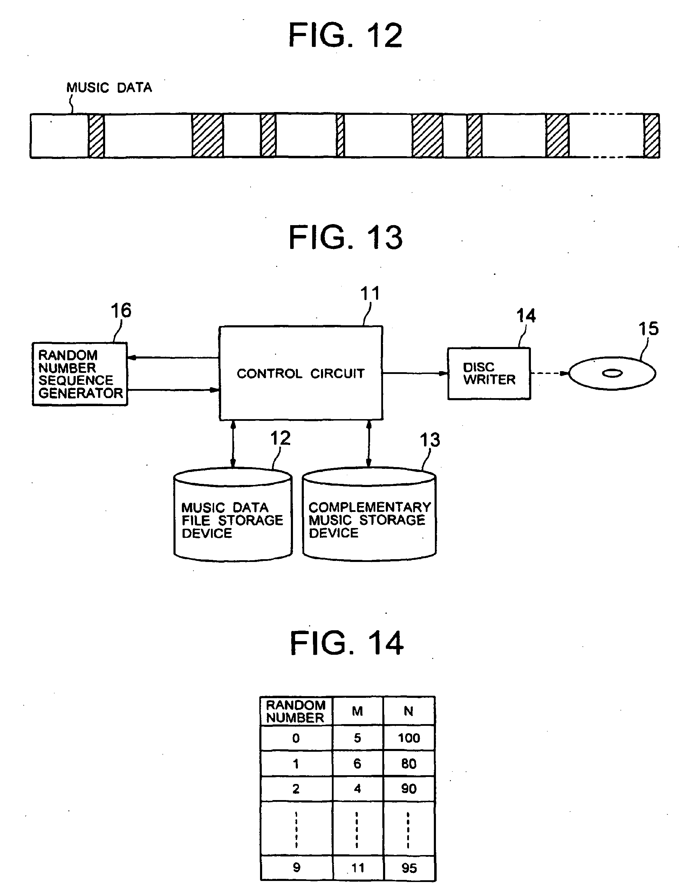

The way of making the music data incomplete shown in Figure 3 is dropping a portion of the music data at predetermined intervals consistently, but it is also satisfactory for the music data to have missing portions of random lengths at random intervals as shown in Figure 12. The shaded portions represent the missing portions in Figure 12. The remaining music data is the incomplete music data, and the data of the missing portions is the complementary music data.

Referring to Figure 13, a data separation device for causing the music data to have the missing portions at random intervals includes a random number sequence generator 16. This data separation device also includes a control circuit 11, a music data file storage device 12, a complementary music file storage device 13 and a disc writer 14, like the one illustrated in Figure 6.

The random number sequence generator 16 generates a random number sequence, made up of the numbers 0 to 9, at a period of 2³² as it is given an unspecified (non-specific) random number generation instructing value from the control circuit 11. When the random number generation instructing value is defined, the random number sequence generator 16 produces a corresponding random number sequence. "M" of the M bytes of the complementary music data and "N" of the N bytes of the incomplete music data to be taken out from the complete music data are determined on the basis of the respective random numbers in the random number sequence. The relationship of N >> M is established in this embodiment. It should be noted, however, that the relationship of N > M is also acceptable, and the relationship of N = M is still satisfactory in order to maintain a copyright, as mentioned above.

The relationship among the random number, "M" of the M bytes of complementary music data and "N" of the N bytes of incomplete music data is stored, in the form of a random number-M-N table as shown in Figure 14, in an internal memory (not shown) of the control circuit 11. The control circuit 11 separates the data of the complete music file, using the random number-M-N table, to prepare the incomplete music file and complementary music file.

The file structures of the incomplete and complementary music files created by the random number scheme using this random number-M-N table are those shown in Figures 4 and 5 as in the case of simple skipping scheme. The header contents of the incomplete music file, however, include the way of making the music data incomplete (random number scheme) and the file names of the incomplete and complementary music files, and the header contents of the complementary music file include the way of making the music data incomplete (random number scheme), the file names of the incomplete and complementary music files and the random number generation instructing value R.

The reason the random number generation instructing value R is not recorded in the incomplete music file is that a tendency or system of the random numbers is assumable if this value R is recorded in a disc distributed free. There is a risk that the complementary music data would be reproduced in an improper manner.

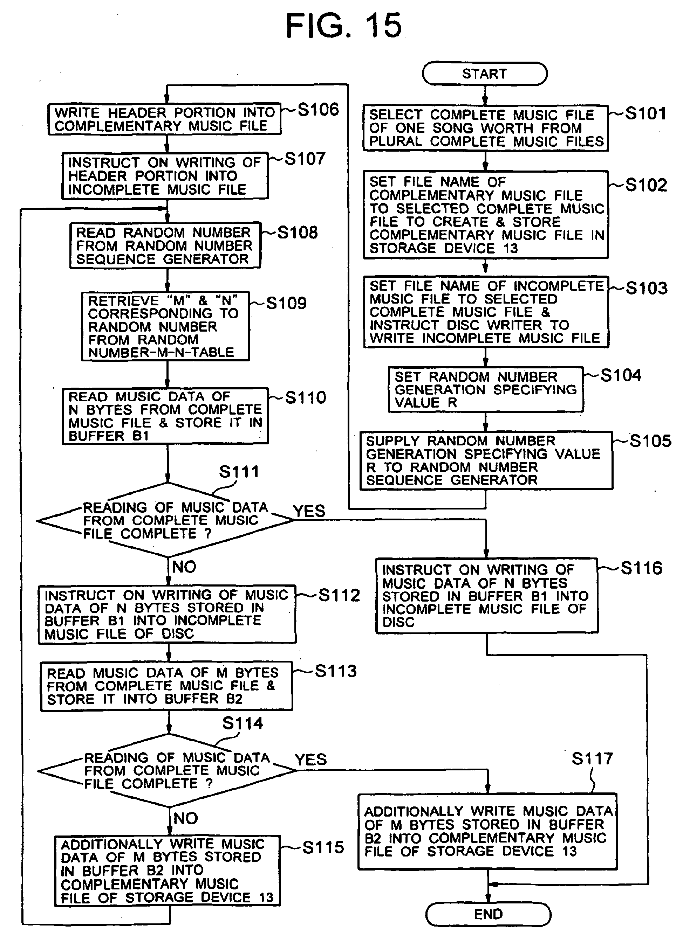

Referring to Figure 15, the control circuit 11 of the data separation device shown in Figure 13 first selects a complete music file of one song worth from a plurality of complete music data stored in the music data file storage device 12 (Step S101). The control circuit then sets the file name of the complementary music file relative to the selected complete music file to create and store the complementary music file in the complementary music file storage device 13 (Step S102). Likewise, the control circuit sets the file name of the incomplete music file to the selected complete music file and instructs the disc writer 14 to write the incomplete music file (Step S103). The disc writer 14 creates the incomplete music file and writes it on the disc 15 in response to the write command. The selected complete music file is referred to as Fcom, the corresponding incomplete music file is referred to as Fincom and the corresponding complementary music file is referred to as Fsup in the following description as in the foregoing description.

The control circuit 11 sets the random number generation instructing value R (Step S104), and supplies it to the random number sequence generator 16 (Step S105). The random number generation value R is randomly determined from 0 to 9. As the random number sequence generator 16 is given the random number generation instructing value R, it is brought into an initial condition to successively produce random numbers in a random number sequence in compliance with the random number generation instructing value R. The control circuit 11 sequentially reads the random numbers of this sequence as mentioned in Step S108 (will be described). The random number sequence generator 16 issues a random number as the control circuit 11 reads a preceding random number.

The control circuit 11 makes a header portion of the complementary music file Fsup to the complete music file Fcom and additionally writes it in the complementary music file Fsup in the complementary music file storage device 13 (Step S106). The control circuit 11 also creates a header portion of the incomplete music file Fincom to the complete music file Fcom and instructs the disc writer 14 to write the header portion into the incomplete music file Fincom (Step S107). The disc writer 14 additionally writes the header portion to the incomplete music file Fincom of the disc 15 in response to the write command.

The control circuit 11 reads a random number for the random number sequence generator 16 (Step S108) and retrieves "M" and "N" of the above mentioned M and N bytes in correspondence with the random number from the random number-M-N table (Step S109).

The control circuit reads music data of N bytes from the complete music file Fcom selected from the complementary music file storage device 13 and stores it in an internal buffer B1 (not shown) (Step S110). The control circuit then determines whether the complete music file Fcom has been read completely (Step S111). If data less than N bytes remains in the complete music file Fcom at Step S110, it is read together with the music data of N bytes. If it is the case or no music data remains after reading the music data of N bytes at Step S110, it is determined at Step S111 that the complete music file Fcom has been read completely.

When Step S111 determines that all the complete music file Fcom is not read entirely, the control circuit instructs the disc writer 14 to write the music data of N bytes stored in the internal buffer B1 into the incomplete data portion of the incomplete music file Fincom (Step S112). Accordingly, the disc writer 14 additionally writes the music data of N bytes into the incomplete data portion of the incomplete music file Fincom of the disc 15 on the basis of the write command.

After Step S112, the control circuit 11 reads the music data of M bytes from the complete music file Fcom selected from the complementary music file storage device 13 and stores it in an internal buffer B2 (not shown) (Step S113). The control circuit then determines whether the complete music file Fcom has been read completely (Step S114). If music data less than M bytes remains in the complete music file Fcom at Step S113, it is read together with the music data of M bytes. If it is the case or no music data remains after reading the music data of M bytes at Step S113, it is determined at Step S114 that the complete music file Fcom has been read completely.

When Step S114 determines that the reading operation applied to the complete music file Fcom is not complete, the control circuit writes the music data of M bytes stored in the internal buffer B2 into the complementary data portion of the complementary music file Fsup inside the complementary music file storage device 13 (Step S115). The program returns to Step S108 after Step S115 to repeat the above described procedure in accordance with the next random number.

If it is determined at Step S111 that the reading operation to the complete music file Fcom is finished, the control circuit instructs the disc writer 14 to write the music data not greater than N bytes stored in the internal buffer B1 into the incomplete data portion of the incomplete music file Fincom (Step S116). The disc writer 14 additionally writes the music data not larger than N bytes into the incomplete data portion of the incomplete music file Fincom of the disc 15 on the basis of the write instructions. As a result, a single incomplete music file Fincom is formed inside the disc 15.

When it is determined at Step S114 that the reading operation applied to the complete music file Fcom is complete, the control circuit additionally writes the music data not larger than M bytes stored in the internal buffer B1 into the complementary data portion of the complementary music file Fsup inside the complementary music file storage device 13 (Step S117). Execution of Step S117 results in a single completed complementary music file Fsup formed in the complementary music file storage device 13.

The above described operation of the data separation device in accordance with the random number scheme is repeatedly performed the number of times which corresponds to the number of the songs to be recorded on the disc 15. When such repetitive writing of the incomplete music files onto the disc 15 is finished, a list of recorded songs in the form of file is also written onto the disc 15. A process program for the terminal device is further written on the disc 15. As the writing onto the disc 15 is complete, a plurality of copied CD-ROMs are fabricated using the disc 15 as a master disc. One of these CD-ROMs is the above mentioned CD-ROM 8.

The combine operation employed in the random number scheme will be described. Like in the foregoing description, the complementary music file stored in the internal storage device 9 at Step S43 is referred to as Fsup, the incomplete music file read from the CD-ROM 8 in response to the instructions at Step S45 is referred to as Fincom, and the complete music file created by the combine operation is referred to as Fcom.

A random number sequence generator (not shown) identical to the described random number sequence generator 16 is incorporated in the terminal device 3. This random number sequence generator may be a program software recorded in the incomplete music file. In order to prevent a structure of the random number sequence generator from being investigated, this software may be transmitted over the network together with the complementary music file.

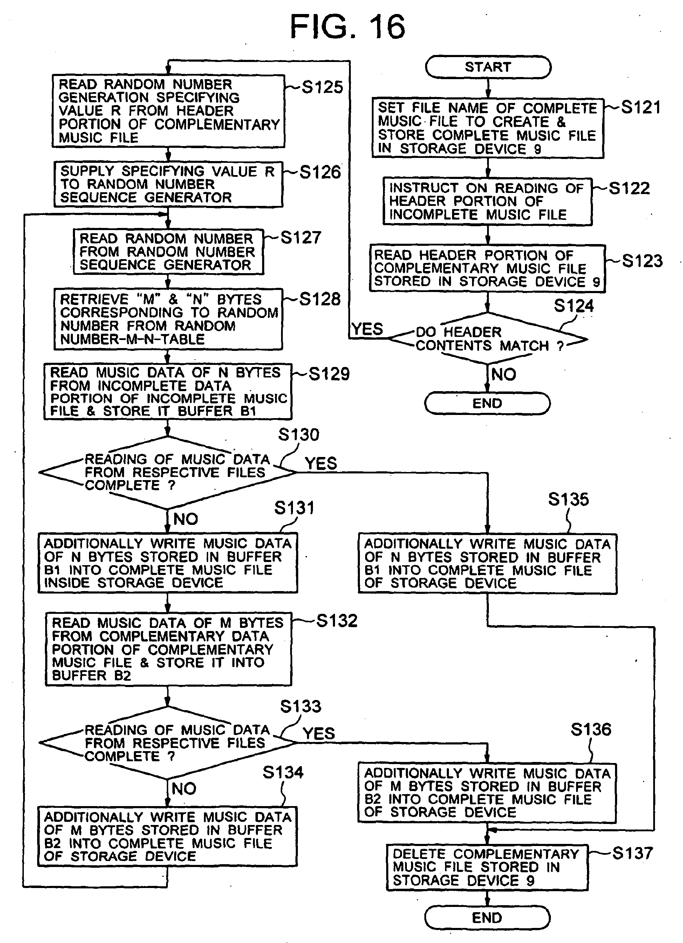

Referring to Figure 16, the terminal device 3 first sets a file name of the complete music file Fcom, and creates and stores the complete music file in the internal storage device 9 (Step S121). The terminal device 3 then instructs the CD-ROM drive 6 to read the header portion of the incomplete music file Fincom stored in the CD-ROM 8 (Step S122). The CD-ROM drive 6 reads the header portion of the incomplete music file Fincom in response to the read instructions, and supplies it to the terminal device 3. The terminal device 3 also reads the header portion of the complementary music file Fsup stored in the internal storage device 9 (Step S123). It is then determined whether the header portion of the incomplete music file Fincom matches the header portion of the complementary music file Fsup (Step S124). Specifically, it is determined whether information such as the scheme of making the music data incomplete, and the file names of the incomplete and complementary music files matches between the incomplete and complementary music files. If it is not confirmed at Step S124 that the header portion information of the file Fincom matches that of the file Fsup, it is assumed that one of the files has an error, and the combine operation is terminated.

If the coincidence of the header information is confirmed between the two files Fincom and Fsup at Step S124, it means that the incomplete music file Fincom and complementary music file Fsup are separated from the same complete music file. The terminal device therefore reads the random number generation instructing value R from the header portion of the complementary music file Fsup (Step S125). The terminal device then supplies the random number generation instructing value R to the built-in random number sequence generator (Step S126). Upon receiving the random number generation instructing value R, the random number sequence generator is brought into an initial condition to produce random numbers successively in a sequence on the basis of the random number generation instructing value R. The terminal device 3 reads the random numbers of this sequence in turn. The random number sequence generator issues a random number as a preceding random number is read.

The terminal device 3 reads the random numbers from the random number sequence generator (Step S127), and retrieves the "M" and "N" corresponding to the obtained random number from the random number-M-N table (Step S128). The terminal device 3 then successively reads music data of N bytes worth from the incomplete data portion of the incomplete music file Fincom and stores them in the internal buffer B1 (Step S129). The terminal device determines whether the data portions of the files Fincom and Fsup are completely read by this reading operation applied to the incomplete data portion of the incomplete music file Fincom (Step S130). If data less than N bytes remains in the incomplete data portion of the incomplete music file Fincom at Step S129, it is read together with the data of N bytes.

If the reading is not complete at Step S130, the music data of N bytes stored in the buffer B1 is additionally written into the complete music file Fcom of the storage device 9 (Step S131). The music data of M bytes is also successively read from the complementary data portion of the complementary music file Fsup and stored in the buffer B2 (Step S132). It is then determined whether the data portions of both of the files Fincom and Fsup are entirely read by this reading operation applied to the complementary data portion of the complementary music file Fsup (Step S133). If data less than M bytes remains in the complementary data portion of the complementary music file Fsup at Step S132, it is read together with M bytes of music data.

If the reading is not complete at Step S133, the music data of M bytes stored in the buffer B2 is additionally written into the complete music file Fcom of the storage device 9 (Step S134). The program returns to Step S127 after Step S134, and obtains a new random number to iterate the above described operation.

If it is determined at Step S130 that the incomplete data portion of the incomplete music file Fincom has been read completely, the music data not greater than N bytes stored in the buffer B1 is additionally written into the complete music file Fcom of the storage device 9 (Step S135). As a result, the complete music file Fcom of the selected song is completely formed in the storage device 9.

If it is determined at Step S133 that the complementary data portion of the complementary music file Fsup has been read completely, the music data not greater than M bytes stored in the buffer B2 is additionally written into the complete music file Fcom of the storage device 9 (Step S136). As a result, the complete music file Fcom of the selected song is completely formed in the storage device 9.

After Step S135 or S136, the complementary music file Fsup is deleted from the storage device 9 (Step S137).

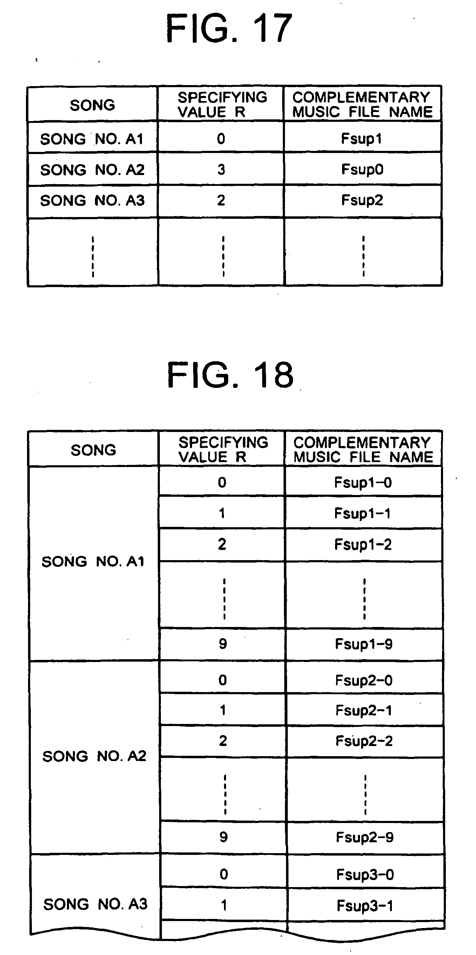

In the data separation and combine operations under the random number scheme, the random number generation specifying value R is constant with respect to the same song so that the random number, M and N obtained in turn are also constant with respect to the same song. In the storage device 7 of the information administration server 1, therefore, a complementary music file table is stored in which a random number generation specifying value R and a complementary music file are associated with each of the songs as shown in Figure 17.

It should be noted, however, that a plurality of different random number generation specifying values R may be associated with each song. In this case, the storage device 7 of the information administration server 1 stores a complementary music file table having a plurality of songs, each of which is accompanied with a plurality of random number generation specifying values R and corresponding complementary music files, as shown in Figure 18, for example. The header portion of the incomplete music file includes the random number generation specifying value R as well as the way of partly omitting the music data (random number scheme) and the file names of the incomplete and complementary music files, like the header portion of the complementary music file. The terminal device 3, therefore, sends the random number generation specifying value R together with the complementary music file name when it requests the complementary music file at Step S40. The information administration server 1 retrieves a complementary music file from the database and sends it to the buffer at Step S41 using the CD-ROM number specified by the already received serial number, the song having the complementary music file name carried with the complementary music file request, and the random number generation specifying value R. The information administration server 1 then transmits the retrieved complementary music file to the terminal device 3 at Step S42.

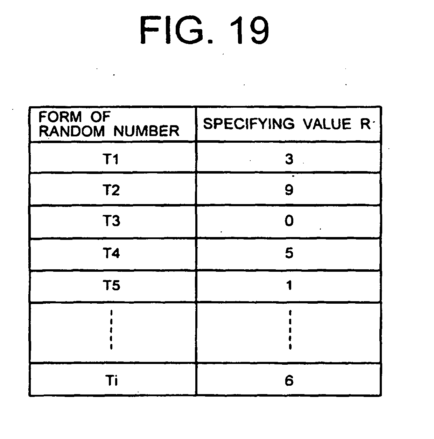

In order to prevent the relationship between the random number generation specifying value R, M and N from being easily analyzed, the storage device 7 of the information administration server 1 may store a data table of random number forms that indicates the relationship between "i" (for example, twenty) random number forms T1 to Ti and the random number generation specifying values R as shown in Figure 19. In such a case, a type of random number T (i.e., one of T1 to Ti) corresponding to the random number generation specifying value R obtained at Step S104 is randomly selected from the random number form data table, and ordered to be written into the incomplete music file Fincom when the header portion is ordered to be written into the incomplete music file Fincom at Step S107. The terminal device 3 sends the random number type T along with the complementary music file name when it sends the complementary music file request at Step S40. The information administration server 1 first acquires the random number generation specifying value R corresponding to the random number type T from the random number type data table, and retrieves a complementary music file from the database to send it to the buffer at Step S41 using the CD-ROM number specified by the already received serial number, the song having the complementary music file name carried with the complementary music file request, and the random number generation specifying value R. The information administration server 1 then transmits the retrieved complementary music file to the terminal device 3 at Step S42.

A music data separation method according to a music data compression scheme may also be employable in addition to the above described simple skipping and random number scheme.

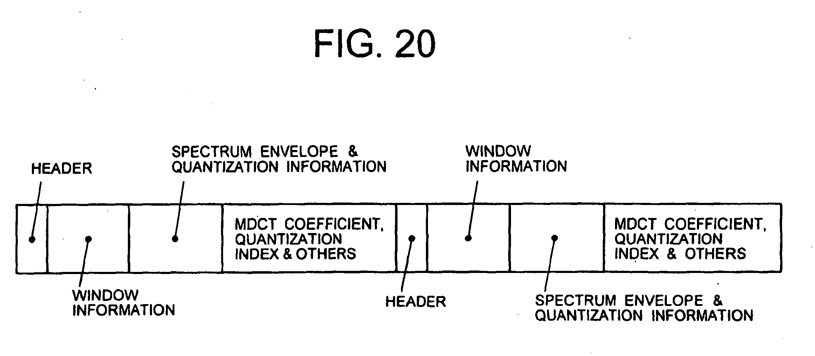

Referring to Figure 20, illustrated is a structure of the music data when an MPEG 4 Audio Twin VQ method is utilized as the compression method. This is a structure in which a header, window information, spectrum envelope and quantization information, MDCT coefficient and quantization index, and other information are repeated. The data separation apparatus causes the TwinVQ music data to lose the spectrum envelop and quantization information so as to prepare an incomplete music file and a complementary music file.

The data separation apparatus for the Twin VQ music data has the same structure as that shown in Figure 6. The music data file storage device 12 stores a plurality of complete music files compressed in accordance with the Twin VQ method.

A data separation operation will be described in which the data compressed by the Twin VQ method is divided by the control circuit 11 of the data separation device. The file structures of the incomplete and complementary music files resulting from this data separation are those shown in Figures 4 and 5 respectively, as in the case of the simple skipping scheme. The incomplete and complementary music files have the same header portion contents; the way of partly omitting the music data (Twin VQ based scheme) and the file names of the incomplete and complementary music files are the same.

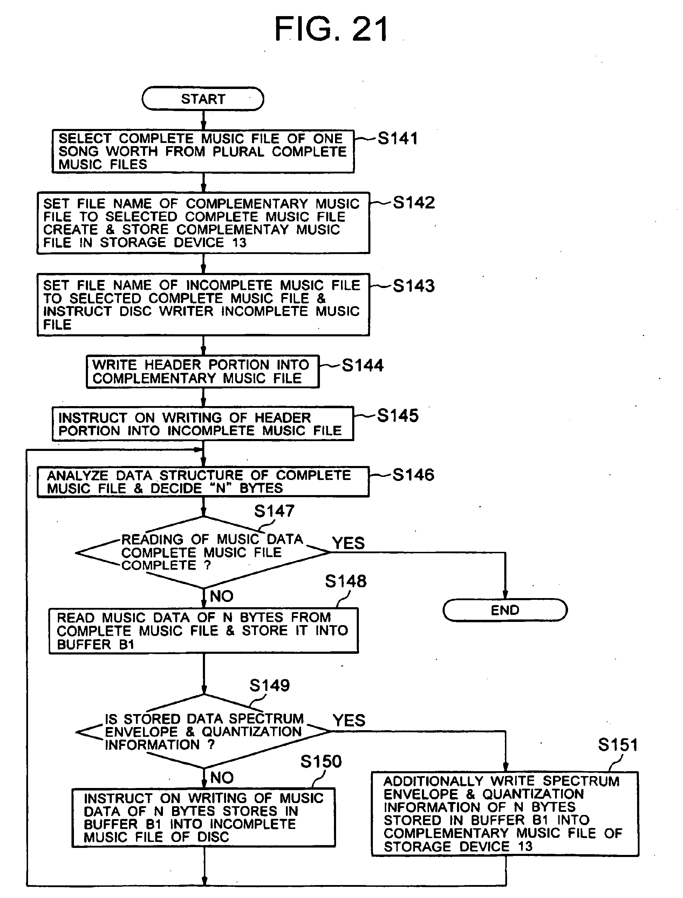

Referring to Figure 21, the control circuit 11 first selects a complete music file of one song worth from a plurality of complete music file stored in the music data file storage device 12 (Step S141). The control circuit then sets the file name of the complementary music file relative to the selected complete music file to create and store the complementary music file in the complementary music file storage device 13 (Step S142). Likewise, the control circuit sets the file name of the incomplete music file to the selected complete music file and instructs the disc writer 14 to write the incomplete music file (Step S143). The disc writer 14 creates the incomplete music file and writes it on the disc 15 in response to the write command. The selected complete music file is here referred to as Fcom, the corresponding incomplete music file is referred to as Fincom and the corresponding complementary music file is referred to as Fsup.

The control circuit 11 prepares a header portion of the complementary music file Fsup to the complete music file Fcom and additionally writes it in the complementary music file Fsup inside the complementary music file storage device 13 (Step S144). The control circuit 11 also creates a header portion of the incomplete music file Fincom to the complete music file Fcom and instructs the disc writer 14 to write the header portion into the incomplete music file Fincom (Step S145). The disc writer 14 additionally writes the header portion to the incomplete music file Fincom of the disc 15 in response to the write command.

The control circuit analyzes the data structure inside the complete music file Fcom selected from the complementary music file storage device 13, and decides the "N" bytes to be read (Step S146). The control circuit determines based on the result of this analysis whether the complete music file Fcom has been read completely (Step S147).

If it is determined at Step S147 that the complete music file Fcom has not been read entirely, the control circuit reads N bytes of data from the complete music file Fcom and stores it in the buffer B1 (Step S148). The control circuit then determines whether the data stored in the buffer B1 is the spectrum envelope and quantization information (Step S149). If it is not the spectrum envelope and quantization information, the control circuit instructs the disc writer 14 to write the N bytes of data stored in the buffer B1 into the incomplete data portion of the the incomplete music file Fincom (Step S150). Accordingly, the disc writer 14 additionally writes the N bytes of data into the incomplete data portion of the incomplete music file Fincom of the disc 15 on the basis of the write command. If the data stored in the buffer B1 is the spectrum envelope and quantization information, the control circuit additionally writes the N bytes of data stored in the buffer B1, i.e., the spectrum envelope and quantization information, into the complementary data portion of the complementary music file Fsup inside the complementary music file storage device 13 (Step S151). The program returns to Step S146 after Step S150 or S151 to iterate the above described procedure.

When Step S147 determines that the reading operation applied to the complete music file Fcom is complete, it means that a single incomplete music file Fincom is complete to the complete music file Fcom of the TwinVQ format inside the disc 15 and a single complementary music file Fsup is complete inside the complementary music file storage device 13. The control circuit 11 therefore terminates the data separation operation.

The reason the spectrum envelope and quantization information is only removed from the single incomplete music file Fincom to the complete music file Fcom of the TwinVQ format is because it is not possible at all to reproduce a song from the information that does not have the spectrum envelope and quantization information. For the trial listening purpose, the CD-ROM 8 records reproducible music data (complete music data) of several songs worth, which would last several tens of seconds, and these music data are read out for the trail listening at Step S25.

Alternatively, some portions may be omitted in the window information and/or MDCT coefficient quantization index information if degrading the music information is satisfactory, rather than completely disabling the music information from being reproduced as described above.

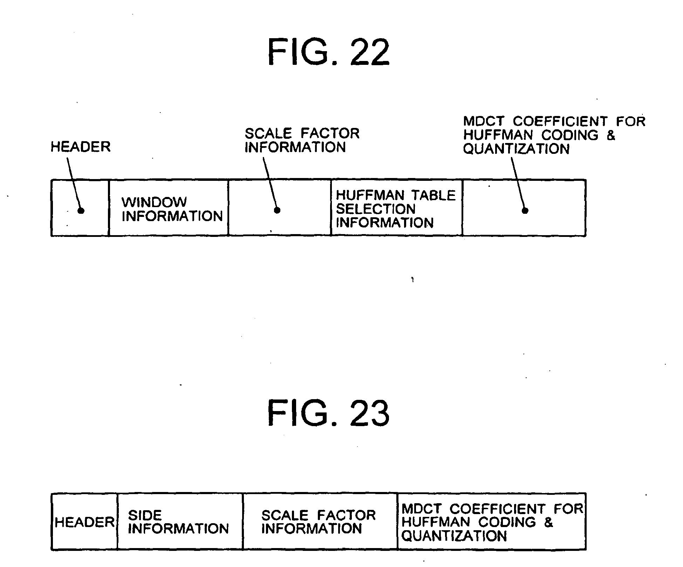

The frame structures of the data compressed by the above mentioned compression methods, i.e., ACC method and MP3 method, are shown in Figures 22 and 23 respectively. The AAC method shown in Figure 22 causes the Huffman table selection information to miss as the complementary music data. The MP3 method shown in Figure 23 causes the Huffman table selection information, which is included in the side information, to miss as the complementary music data. Alternatively, the entire side information may be missed as the complementary music data.

The combine operation to regenerate the complete music file of the TwinVQ format will be described. Like in the foregoing description, the complementary music file stored in the internal storage device 9 at Step S43 is referred to as Fsup, the incomplete music file read from the CD-ROM 8 in response to the instructions at Step S45 is referred to as Fincom, and the complete music file created by the combine operation is referred to as Fcom.

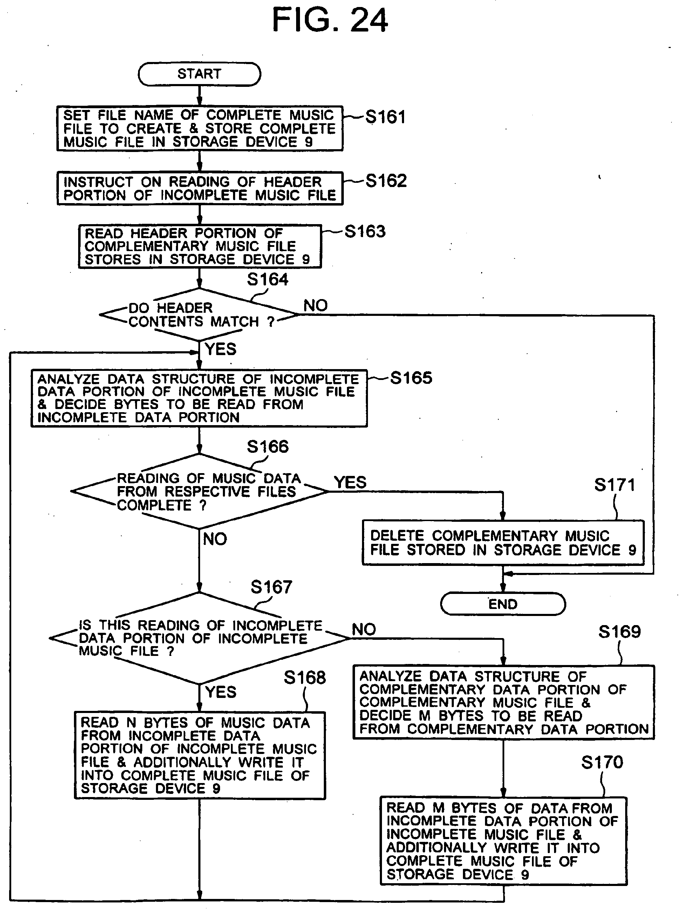

Referring to Figure 24, the terminal device 3 first, sets a file name of the complete music file Fcom, and creates and stores the complete music file in the internal storage device 9 (Step S161). The terminal device 3 then instructs the CD-ROM drive 6 to read the header portion of the incomplete music file Fincom stored in the CD-ROM 8 (Step S162). The CD-ROM drive 6 reads the header portion of the incomplete music file Fincom in response to the read instructions, and supplies it to the terminal device 3. The terminal device 3 also reads the header portion of the complementary music file Fsup stored in the internal storage device 9 (Step S163). It is then determined whether the header portion of the incomplete music file Fincom matches the header portion of the complementary music file Fsup (Step S164). Specifically, it is determined whether information such as the scheme of making the music data incomplete and the file names of the incomplete and complementary music files matches between the incomplete and complementary music files. If it is not confirmed at Step S164 that the header portion information of the file Fincom matches that of the file Fsup, it is assumed that one of the files has an error, and the combine operation is terminated.

If the coincidence of the header information is confirmed between the two files Fincom and Fsup at Step S164, it means that the incomplete music file Fincom and complementary music file Fsup are separated from the same complete music file. The terminal device therefore analyzes the data structure of the incomplete data portion of the incomplete music file Fincom and decides how many bytes should be read from the incomplete data portion (Step S165). If the music data to be read next time is the data of the incomplete data portion in the incomplete music file Fincom, the "N" of N bytes of data will have a predetermined value. If, on the other hand, the music data of the complementary music file Fsup should be read next time, i.e., the spectrum envelope and quantization information should be read, "N" bytes will be zero byte.

After Step S165, the terminal device determines whether the data portions of the files Fincom and Fsup are completely read, depending upon the data structure analysis performed at Step S165 (Step S166). If the data reading is not complete, it is then determined whether this reading is applied to the incomplete data portion of the incomplete music file Fincom (Step S167). If the answer is yes, the terminal device successively reads the N bytes of data from the incomplete data portion of the incomplete music file Fincom and additionally writes them into the complete music file Fcom of the storage device 9 (Step S168).

If it is then determined that the reading is applied to the complementary data portion of the complementary music file Fsup, the terminal device analyzes the data structure of the complementary data portion of the complementary music file Fsup and decides the M bytes to be read from the complementary data portion (Step S169). The bytes of a pair of spectrum envelope and quantization information is determined to be M, for example. The terminal device then reads the M bytes of data from the complementary data portion of the complementary music file Fsup and additionally writes them into the complete music file Fcom of the storage device 9 (Step S170). After Step S168 or S170, the program returns to Step S165 to repeat the above described procedure.

If it is determined at Step S166 that the data portions of the files Fincom and Fsup have been read completely, it means that the complete music file Fcom having the TwinVQ form of the selected song is completely formed in the storage device 9. In this case, the complementary music file Fsup is deleted from the storage device 9 (Step S171).

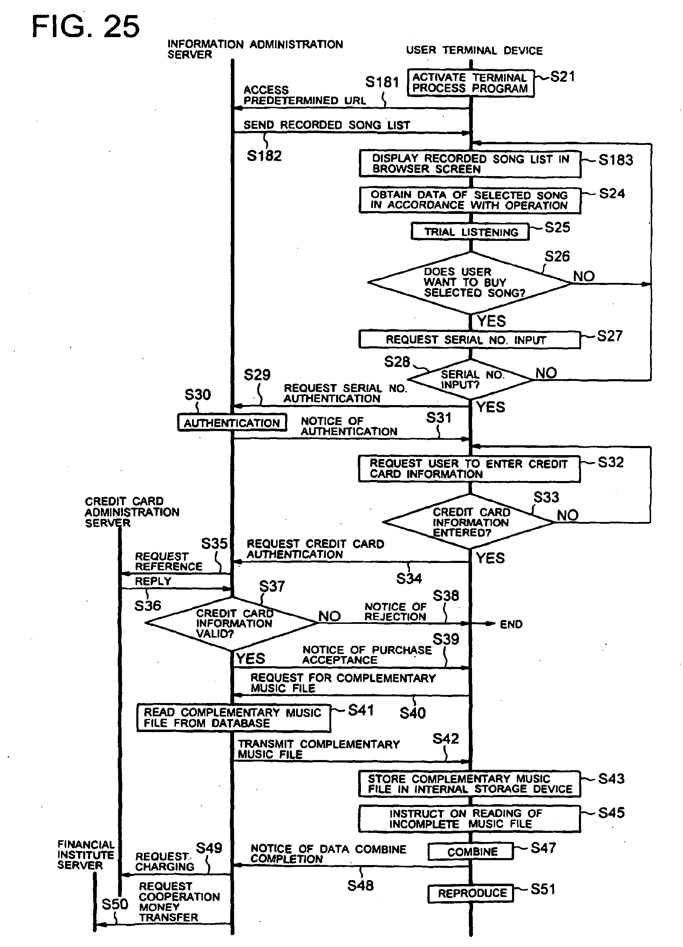

Referring to Figure 25, another example of the operation of the information providing system, which is different from that shown in Figure 8, will be described below.

In Figure 8, the user terminal device 3 executes the terminal process program written in the CD-ROM 8 at Step S21 and retrieves the list of the songs recorded in the CD-ROM 8 at Step S22. Alternatively, the user terminal device 3 may obtain and display the list of the recorded songs from the information administration server 1 as shown in Figure 25. In other words, the user terminal device 3 may activate the browser software to look at the Web pages and access a predetermined URL (Uniform Resource Locator) of the information administration server 1 after Step S21 (Step S181). In response to this access, the information administration server 1 sends the data of the recorded song list, which may be an HTML file stored in the predetermined URL, to the terminal device 3 (Step S182). This URL is stored in the CD-ROM 8. It is included in, for instance, the terminal process program stored in the CD-ROM 8.

Upon receiving the recorded song list, the user terminal device 3 displays it in a browser screen on the display (Step S183). The subsequent procedure is the same as that after Step S23 in Figure 8.

It should be noted here that the incomplete music file corresponding to the song selected at Step S24 may not exist in the CD-ROM 8 in the procedure of Figure 25. If it is the case, the user terminal device may display a message such as "Please load No. X disc" to the user such that the user will replace the current CD-ROM by another one that contains the incomplete music file corresponding to the selected song. This is significantly effective when a plurality of CD-ROMs are distributed.

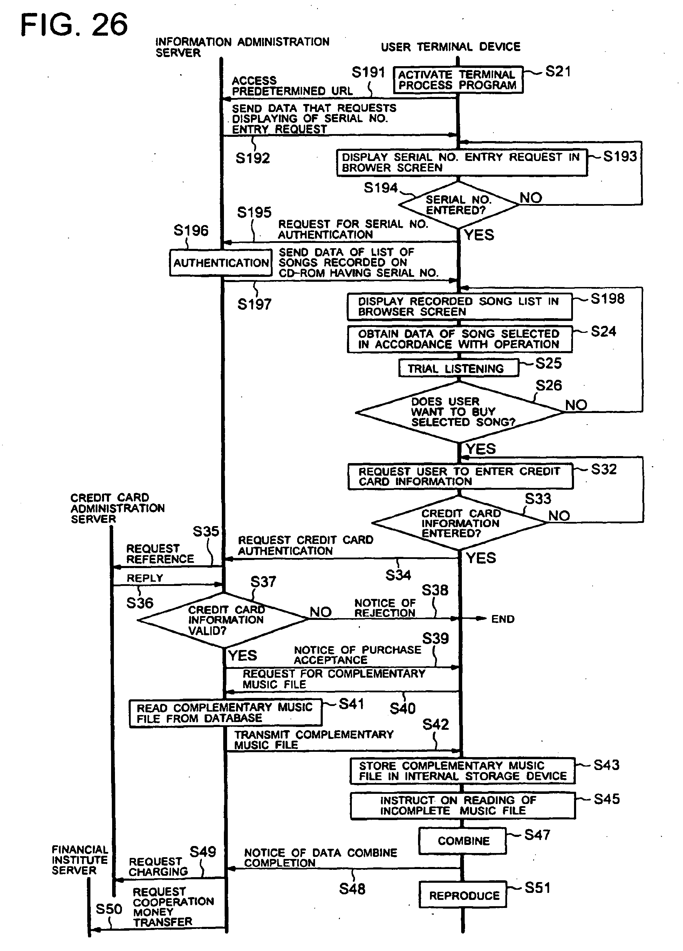

Referring to Figure 26, illustrated is still another example of the operation of the information providing system. After Step S21, the user terminal device 3 activates the Web browser to access a predetermined URL of the information administration server 1 (Step S191). In response to this access, the information administration server 1 sends the serial number entry request display data, which is stored in the predetermined URL, to the terminal device 3 (Step S192). Upon receiving this data, the user terminal device 3 displays the serial number entry request in a browser screen on the display (Step S193). The user then enters the serial number printed on the card distributed together with the CD-ROM 8 by operating the keys as described above. The terminal device 3 determines whether or not the entry of the serial number is made (Step S194). If the serial number is input, the terminal device requests the information administration server 1 to authenticate the serial number (Step S195). The authentication request carries the serial number input by the user.

As the information administration server 1 receives the serial number authentication request, it uses the database formed in the storage device 7 to authenticate the serial number (Step S196). This authentication process is similar to that at Step S30. The information administration server 1 determines at Step S196 whether the same serial number as received upon the authentication request exists in the database. If the information administration server 1 confirms the presence of the same serial number, it sends the data of songs recorded in the CD-ROM having this serial number (Step S197). The terminal device receives the recorded song list data, and displays it in the browser screen of the display (Step S198). The subsequent procedure is the same as that after Step S23 in Figure 8.

It should be noted that the serial number authentication is already complete when the selected song is purchased at Step S26 in the flowchart of Figure 26 so that the program may immediately proceed to Step S32 as illustrated, so as to request the user to enter the credit card information using the display.

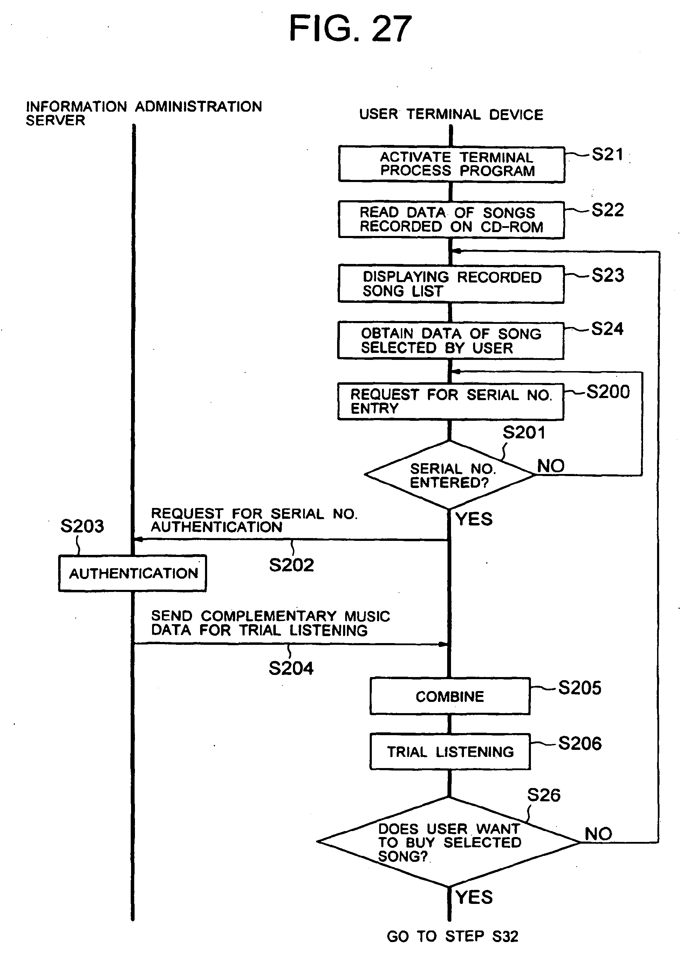

The terminal device 3 may ask the information administration server 1 to send the complementary music data for the trail listening such that the user can listen the selected song for the trail purpose. As illustrated in Figure 27, for example, when the terminal device 3 obtains the selected song data at Step S24, it displays the serial number entry request to the user (Step S200). If the serial number is entered (Step S201), the terminal device requests the information administration server 1 to authenticate that serial number (Step S202).

As the information administration server 1 receives the serial number authentication request, it utilizes the database formed in the storage device 7 to conduct the authentication process (Step S203). When the information administration server confirms the presence of the same serial number in the authentication process, it sends the complementary music data for the trail listening; which is stored in the database created in the storage device 7, to the terminal device 3 (Step S204). This complementary music data may be data for all the songs recorded on the CD-ROM 8 or for the song selected at Step S24. If the complementary music data for the selected song is only sent, the serial number authentication request at Step S202 includes the data of the selected song. As the terminal device 3 receives the complementary music data for the trail listening, it combines the incomplete music file with the complementary music file for the trail to create the complete music file for the trail (Step S205; combine operation). After the combine operation, the user terminal device commences the trail listening with the trail complete music file (Step S206). The subsequent procedure is the same as that after Step S25 in Figure 26.

It should be noted that the information management server 1 may send first some tens of seconds of the complete music data of the selected song in order to dispense with the necessity of the combine operation for the trail listening.

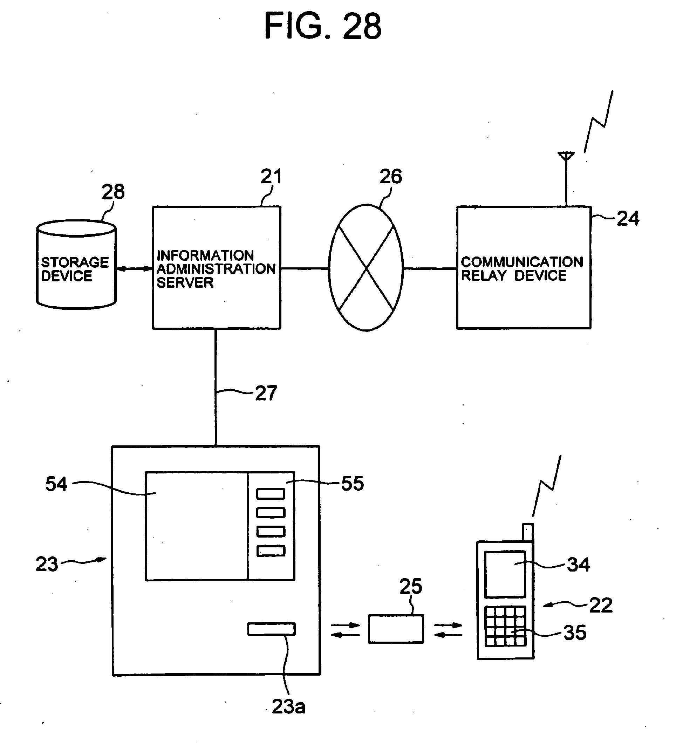

Referring to Figure 28, illustrated is an information providing system equipped with a kiosk terminal device according to the present invention. This information providing system includes an information administration server 21 of a cellar telephone company, a cellar telephone 22 and a kiosk terminal device 23. Electric waves received by and sent from the cellar telephone 22 are caught by a communication relay device (repeater) 24. A communication line or network 26 connects the communication relay device 24 with the information administration server 21. A highspeed dedicated line 27 connects the information administration server 21 with the kiosk terminal device 23.

The information administration server 21 is, for example, located in an information administration center of the cellar telephone company, and is a server for supplying music information to the cellar telephone 22 (will be described in detail). The information administration server 21 has a storage device 28 as a database. Inside the database of the storage device 28, stored are a plurality of complementary music data having a structure shown in Figure 5 in the form of a plurality of files. The complementary music files are allotted song numbers respectively.

The cellar telephone 22 is used by a user who wants to have a song distributed. Although there is only one cellar telephone in this embodiment for the sake of easier understanding, a plurality of cellar telephones are present in reality.

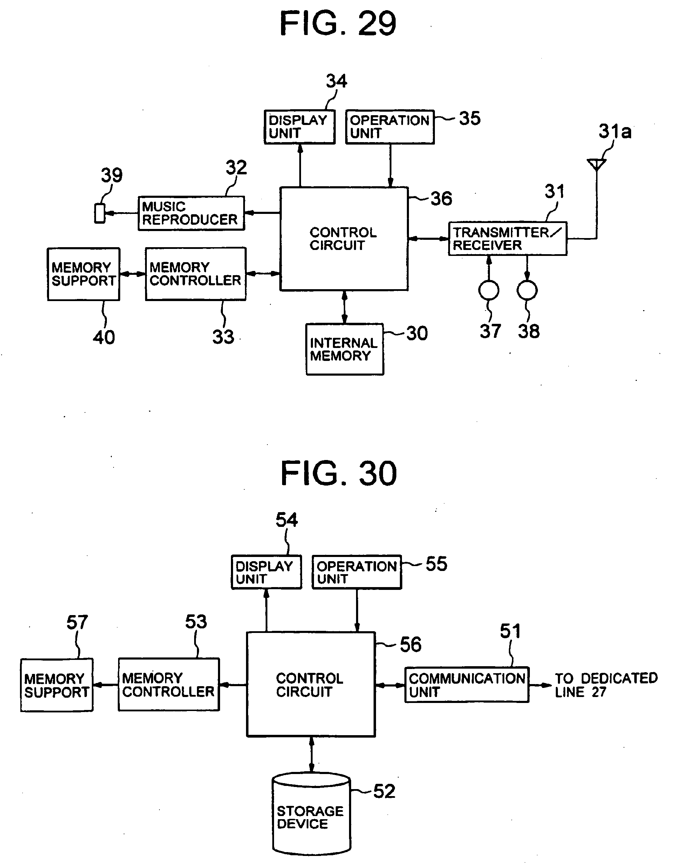

Referring to Figure 29, the cellar telephone 22 includes a transmission/reception part 31 for wireless telephone and data communication, a music reproducing part 32 for decoding music data to reproduce it as an analog audio signal, a memory controller 33 for writing into and reading from a memory card 25 such as a flash memory, a display unit 34, an operation unit 35, and a control circuit 36 constituted by CPU. The control circuit 36 is connected to the transmission/reception part 31, music reproducer 32, memory controller 33, display part 34 and operation part 35 to control the overall operations of the cellar telephone 22. The transmission/reception part 31 has a microphone 37 for telephone talking and a speaker 38 for listening as well as an antenna 31a. The music reproducing part 32 possesses a structure as shown in Figure 2. It should be noted, however, that this music reproducing part 32 is not provided with a speaker; instead, it is equipped with a jack 39 for connection to a pair of headphones (not shown).

A memory support 40 is attached to the memory controller 33 to removably support the memory card 25. The memory card 25 obtains and stores incomplete music file of a desired song from the kiosk terminal device 23, and loads the incomplete music file into the cellar telephone 22. The memory card 25 is inserted into the memory support 40 by the user from an insert opening (not shown) formed in a lateral face of the cellar telephone 22. The memory card 25 fitted and supported in the memory support 40 can be removed by pulling away the memory card from the memory support 40.

The kiosk terminal device 23 is installed at a store such as a convenience store. As illustrated in Figure 30, the kiosk terminal device 23 includes a communication unit 51 connected to a communication network 26 and a high speed dedicated line 27, a storage device 52 constituted by a hard disc, a memory controller 53 for writing data into the memory card 25, a display unit 54, an operation unit 55 and a control circuit 56 constituted by CPU. The control circuit 56 is connected to the communication unit 51, storage device 52, memory controller 53, display unit 54 and operation unit 55, and controls the overall operations of the kiosk terminal device 23. The memory controller 53 is equipped with a memory support 57 to removably support the memory card 25. The memory card 25 is inserted into the memory support 57 by the user from an insert opening 23a formed in a surface of the kiosk terminal device 23. The memory card 25 can be pushed out by an eject button (not shown) or automatically.

The storage device 52 of the kiosk terminal device 23 stores a plurality of incomplete music files. Each of these incomplete music files has a structure shown in Figure 4, which is prepared by the above described data separation apparatus beforehand. The incomplete music files are received by the communication unit 51 over the high speed dedicated line 27 and written into the storage device 52 under the control of the control circuit 56. Since data about song lists are transmitted together with the incomplete music files, they are also written into the storage device 52. The song list data indicate the relationship between the song titles and incomplete music files. The control circuit 56 causes the display unit 54 to list the song titles. A user can select a song in the list by operating a cursor and/or buttons using the operation unit 55.

A user of the cellar telephone 22 inserts the memory card 25 into the memory support 57 from the insertion slot 23a if he or she finds a desired song title among those displayed in the screen 54 of the kiosk terminal device 23.

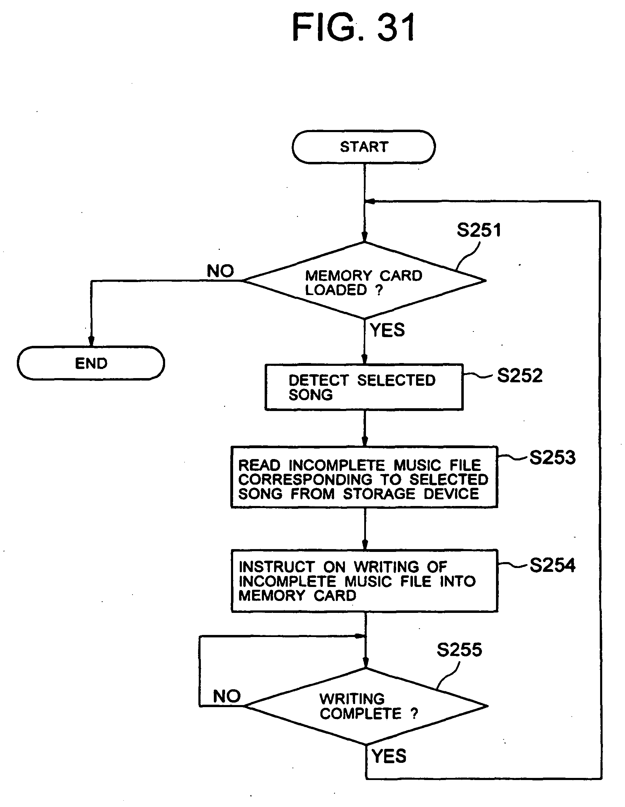

As illustrated in Figure 31, the control circuit 56 of the kiosk terminal device 23 determines via the memory controller 53 whether the memory card 25 is inserted in the memory support 57 (Step S251). If the control circuit 56 confirms the inserted memory card 25, it detects a song selected by a user through the operations made at the operation unit 55 (Step S252). The user moves a cursor to a position of a desired one of the songs listed in the display 54 by using the operation unit 55, and presses a selection button. Then that song is selected. The control circuit determines which song has is selected, on the basis of the cursor position. After Step S252, the control circuit reads an incomplete music file corresponding to the selected song from the storage device 52 (Step S253), and supplies it to the memory controller 53 together with a write command (Step S254). The memory controller 53 writes the incomplete music file into the memory card 25 in response to the write command.

The control circuit 56 determines whether the writing to the memory card 25 is complete (Step S255). If complete, the program returns to Step S251. If there is another desired song, the above described procedure will be repeated to write an incomplete music file of the next song into the memory card 25.

When, for example, the memory card 25 is discharged from the kiosk terminal device 23 upon pressing an eject button on the operation unit 55, Step S252 and subsequent steps will not be executed by the control circuit 56.

As the incomplete music file is written into the memory card 25, the user loads the memory card 25 into the memory support 40 from a slot of the cellar telephone 22.

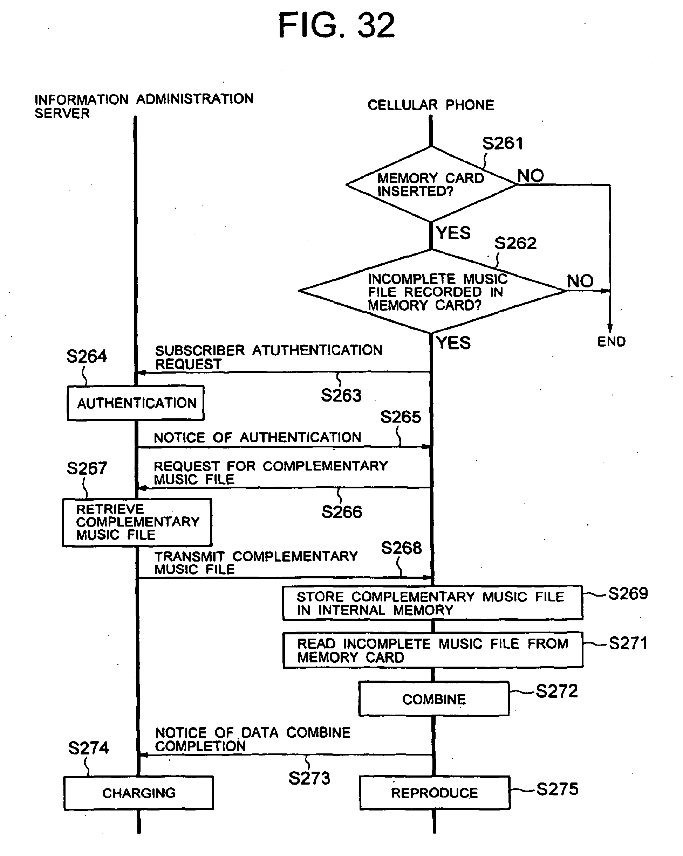

As shown in Figure 32, the control circuit 36 of the cellar telephone 22 determines via the memory controller 33 whether the memory card 25 is inserted in the memory support 25 (Step S261). If the control circuit detects the insertion of the memory card 25, it then determines whether the incomplete music file is stored in the memory card 25 (Step S262). If the incomplete music file is stored in the memory card 25, the control circuit sends a request for subscriber authentication to the information administration server 21 to purchase a song (Step S263). The subscriber authentication request carries user identification information such as a telephone number and an identification code written in the internal memory 30 of the cellar telephone 22. The user identification information is given from the cellar telephone company. It should be noted that the user may also enter another user identification information such as a password using the operation unit 35 at Step S263, and that information may be included in the subscriber authentication request. The cellar telephone 22 and information administration server 21 communicate with each other via the communication repeater 24 and communication network 26.

As the information administration server 21 receives the subscriber authentication request, it conducts the authentication using the database formed in the storage unit 28 (Step S264).

The database in the storage device 28 stores the complementary music file as described above. It also stores the user identification information of all the subscribers. When the information administration server 21 confirms that the user identification information included in the received subscriber authentication request exists in the database, it sends a notice of approval to the cellar telephone 22 (Step S265).

As the cellar telephone 22 receives the approval notice, it sends a request for complementary music file to the information administration server 21 (Step S266). The complementary music file request includes a predetermined song number. The information administration server 21 can specify the requested complementary music file from the song number.

If incomplete music files of plural songs are recorded in the memory card 25 and the user wants to request the information administration server 21 to send complementary music files that mate with incomplete music files for some of the songs, then a list of songs recorded in the memory card 25 is indicated on the display unit 34 immediately before execution of Step S266 and a request for selection of one song from the list is also made to the user through the display unit 34. A request for the complementary music file of the song selected by the user is made at Step S266.

As the information administration server 21 receives the complementary music file request, it retrieves the complementary music file specified by the song number included in the complementary music file request from the database and sends it to the buffer (Step S267). This complementary music file is then transmitted to the cellar telephone 22 (Step S268). When the user wants to buy a plurality of songs, complementary music files of these songs are read and sent to the cellar telephone 22 at Steps S267 and S268.

The cellar telephone 22 receives the complementary music file and temporarily stores it in the internal memory 30 (Step S269). Upon completing the reception of the complementary music file, the cellar telephone 22 instructs the memory controller 33 to read the incomplete music file from the memory card 25 (Step S271). The memory controller 33 reads the incomplete music file from the memory card 25 and supplies it to the cellar telephone 22. The cellar telephone 22 performs a combine operation; it combines the incomplete music file with the complementary music file to create a complete music file (Step S272). This combine operation is the same as that described above. As a result of the combine, the complete music file is written in the memory card 25 via the memory controller 33, and the incomplete music file stored in the memory card 25 is deleted.

When the combine is successfully complete, the cellar telephone 22 sends a notice of data combine completion to the information administration server 21 and terminates the communication (Step S273).

Upon receiving the data combine completion notice, the information administration server 21 conducts a charging operation (Step S274). The bill is charged to the user together with a cellar telephone fee by this charging operation.

As the combine operation is finished, the cellar telephone 22 starts a replay operation (Step S275). In this replay operation, the complete music file created by the combine operation is read from the memory card 25 and fed to the music replay part 32 via the memory controller 33 and control circuit 36. The music replay part 32 decodes the music data successively, D/A converts a PCM audio signal to an analog audio signal, and supplies it to a headphone set via the amplifier. The user therefore can completely listen to a song which he or she has purchased.

In case of the memory card 25 recording the complete music file, it is possible to replay a song with an equipment other than the cellar telephone, such as a personal computer or a music reproducer incorporating a semiconductor memory.

Although the memory card 25 is employed in the above embodiments, it is satisfactory that an incomplete music file of a desired song is recorded in CD-R at the kiosk terminal device 23, and a terminal device such as a personal computer, not the cellar telephone 22, utilizes the CD-R and asks the information administration server to send a complementary music file of the desired song in accordance with the procedure shown in Figure 3 in order to create a complete music file. In this case, the kiosk terminal device 23 has an insertion slot for the CD-R and a write device for the CD-R.

It is also satisfactory that the information such as the incomplete music file is wireless transmitted between the kiosk terminal device 23 and cellar telephone 22 in accordance with, for example, Bluetooth, not via the memory card 25. Alternatively, the information may be exchanged between the kiosk terminal and cellar telephone by wire or cable.

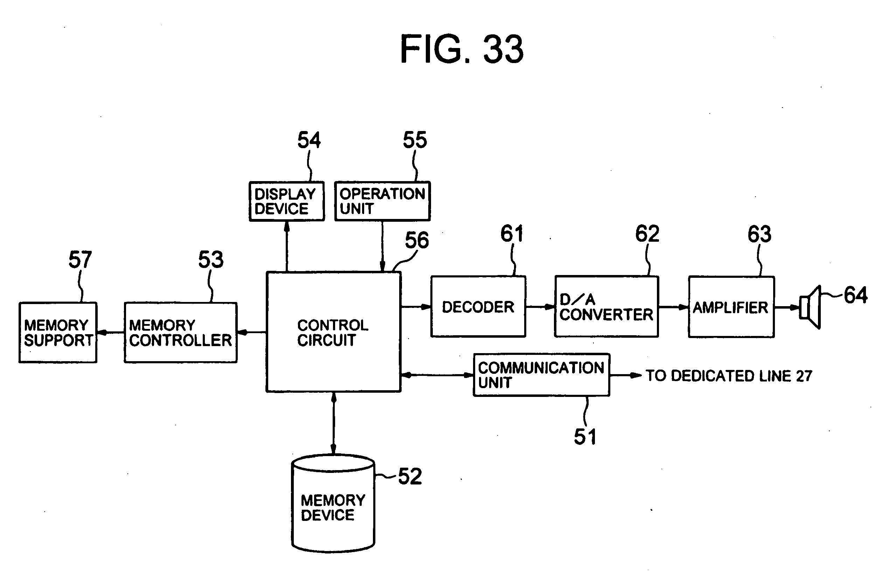

The kiosk terminal device 23 may also be equipped with a data separation function. In such case, the kiosk terminal device 23 includes a decoder 61, a D/A converter 62, an amplifier 63 and a speaker set 64 as shown in Figure 33 as well as the elements shown in Figure 30. The data separation is performed as shown in Figure 7, but it should be noted that the incomplete music file Fincom to the complete music file Fcom is written in the memory card 25 inside the kiosk terminal device 23, and the complementary music file Fsup is temporarily stored in the storage device 52.

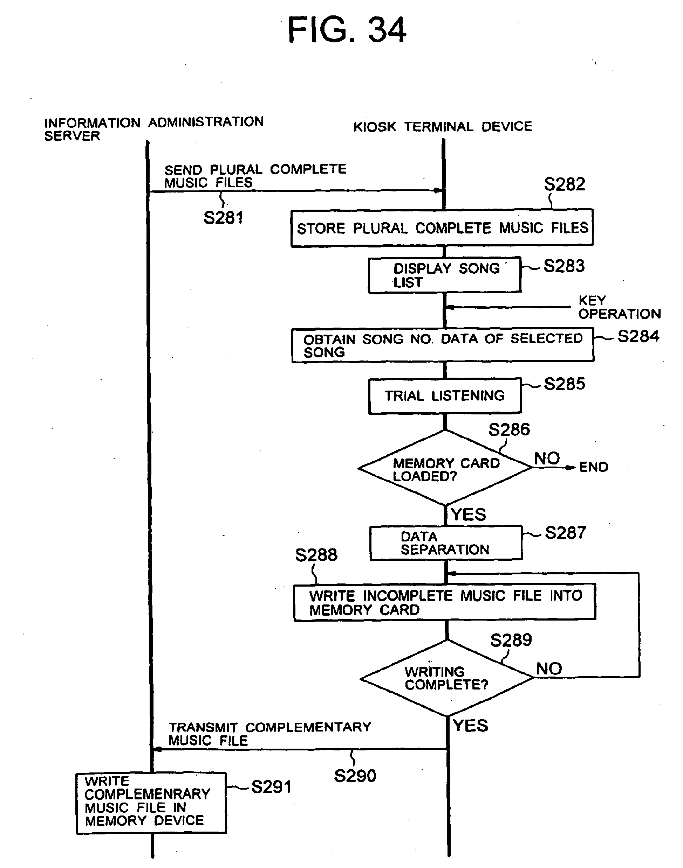

A plurality of complete music files are recorded in the memory device 52 of the kiosk terminal device 23. As illustrated in Figure 34, these complete music files are transmitted from the information administration server 21 (Step S281), received at the communication unit 51 via the high speed dedicated line 27, and written in the memory device 52 under the control of the control circuit 56 (Step S282). Since a song list data is transmitted together with the complete music files, it is also written in the memory device 52. The song list data represents the relationship between the song titles and the complete music files. The control circuit 56 causes the screen 54 to display the song titles in the form of list (Step S283). A song can be selected from the list displayed on the screen 54 of the operation unit 55 by using the cursor and selection button.

The user operates keys on the operation unit 55 when he or she selects a desired song from the displayed song list. Specifically, the user moves the cursor to the desired one of the songs present in the display 54 and presses the selection button in order to select that song. The selected song can be specified from the cursor position. The kiosk terminal device 23 obtains a song number data of the selected song from the key operations made to the operation unit 55 (Step S284), and starts a trial listening operation in accordance with the song number data (Step S285).

The kiosk terminal device 23 retrieves a complete music file corresponding to the song number data from a plurality of complete music files in the memory device 52 during the trial listening, reads first S bytes of music data from the retrieved complete music file, and feeds it to the decoder 61. The decoder 61 successively decodes the S bytes of music data and issues a PCM audio signal to the D/A converter 62. An analog audio signal produced from the D/A converter 62 is supplied to the speaker set 64 via the amplifier 63 so that the user can listen to the selected song for a prescribed period for the trail listening purpose.

If the user of the cellar telephone 22 wishes to purchase the song which the user just listened to, the user inserts the memory card 25 into the memory support 57 from the insertion slot 23a. The user may operate the operation unit 55 instead of inserting the memory card 25.

The control circuit 56 of the kiosk terminal device 23 uses the memory controller 53 to determines whether the memory card 25 is loaded into the memory support 57 (Step S286). Unless the loading of the memory card 25 is detected, the program may be terminated as shown in Figure 34. Alternatively, a message urging the user to load the memory card 25 into the insertion slot 23a may be indicated in the display 54, and the program may execute Step S286 again.

If the control circuit 56 detects the memory card loading, on the other hand, it performs the data separation operation to the complete music file of the selected song (Step S287).

In the data separation operation, the incomplete music file corresponding to the complete music file of the selected song is written into the memory card 25, and the complementary music file is temporarily stored in the memory device as described above. The header portions of the incomplete and complementary music files include various information such as the song number, the way of making the song incomplete, the file names of the incomplete and complementary music files, and the block sizes of the incomplete and complementary data portions respectively.

The control circuit 56 of the kiosk terminal device 23 supplies the just separated incomplete music file to the memory controller 53 and instructs the writing (Step S288). The memory controller 53 writes the incomplete music file in the memory card 25 in response to this write command.

The control circuit 56 determines whether the writing to the memory card 25 is complete (Step S289). If the writing is complete, the control circuit reads the just separated complementary music file from the memory device 52 and sends it to the information administration server 21 (Step S290). Upon receiving the complementary music file, the information administration server 21 stores it in the database of the memory device 28 (Step S291).

The control circuit 56 of the kiosk terminal device 23 returns to Step S283 after Step S290. If there is another desired song, the above described procedure will be repeated to write the incomplete music file corresponding to this song in the memory card 25.

When, for instance, the eject button on the operation unit 55 is operated to discharge the memory card 25 from the kiosk terminal device 23, the control circuit 56 does not execute the process following Step S284.

When the incomplete music file is written in the memory card 25, the user loads the memory card 25 into the insertion slot of the cellar telephone 22 such that the memory card is supported in the memory support 40. The user then obtains the complementary music file from the information administration server 21 using the cellar telephone 22, and combines it with the incomplete music file so that the user can replay the song. This procedure is the same as shown in Figure 32 so that the redundant description is omitted here. If there are a plurality of different data separation schemes, one of them is specified when the complementary music file is requested.

Although the kiosk terminal device 23 does not conduct the combine operation in the above described embodiment, the kiosk terminal device 23 may be equipped with a combiner (not shown) for the combine operation so that a person who does not have a cellar telephone or personal computer is able to buy a disc such as CD-R and MD or a cassette tape for recording the complete music file or analog music signal.

The incomplete file of music data which includes a missing part and the complementary file are prepared in the above embodiments, but the present invention is not limited in this regards. The present invention is, for example, applicable to data carrying other information such as images and pictures. If MPEG image data is utilized as the image data, I frame data may be lacking. The reason the I frame is lacking is because an original image cannot be reproduced without the I frame. The above described TwinVQ method can be employed in the image data separation machine and combine operation.

If there is a demand that the information should be divided into two for the sake of copy right, P frame and/or B frame may be missing.

If a home server is available at home, a server such as the above mentioned information administration server of a center arbitrarily broad-distributes incomplete music file at night or other time. When a user finds a desired song, the user obtains a complementary music file and a billing operation is conducted. It is preferred to automatically delete those incomplete music files for which the user does not request complementary music files within several days if the incomplete music files are arbitrarily distributed.

In case of arbitrary incomplete music file broad distribution, the user may register favorite music information in the center beforehand. That is, the user can register what kind of music he or she wishes to listen to, such as western music, Japanese music, popular songs, enka songs, and the music files may automatically be broad distributed in compliance with the registered information.

It is necessary to prevent the complementary music file from being copied illegally. One of the methods is deleting the complementary music file from the storage device when the complete music file is created at the terminal device as described above. Another method is only allowing a registered terminal device to perform the combine operation. Specifically, when the complementary music file is requested to the server of the information administration center from the terminal device, an identification number of the terminal device is sent. The information administration server appends the identification number to the complementary music file and sends the complementary music file to the terminal device. The combine operation is enabled at the terminal device only when it is confirmed that the identification number of the terminal device itself coincides with the received identification number. It is also feasible for the information administration server to specify a plurality of terminal devices that are allowed to perform the combine operation when the information administration server sends the complementary music file. The complementary music file may have an expiration date or an upper limit number of use.

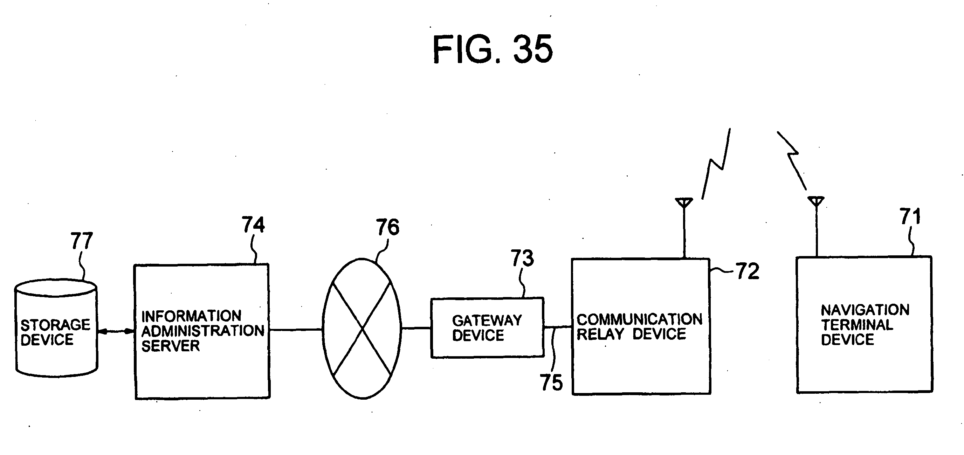

Referring to Figure 35, illustrated is a basic configuration of a navigation system which adopts the information providing system of the present invention. This navigation system includes a navigation terminal device 71, a communication relay device (repeater) 72, a gateway device 73 and an information administration server 74. The navigation terminal device 71 wireless communicates with the communication relay device 72. The communication relay device 72 is connected to the gateway device 73 via a dedicated line 75. The gateway device 73 is connected to the information administration server 74 over the internet 76.

The information management server 74 manages map data used in the navigation terminal device 71.

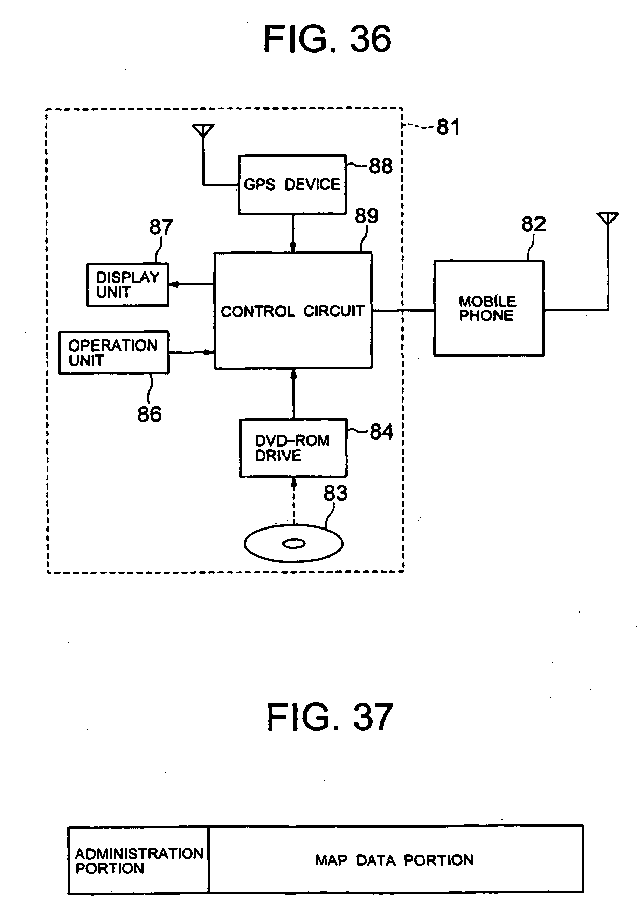

As illustrated in Figure 36, the navigation terminal device 71 has a navigation device 81 and a mobile phone 82 as its major components, and is installed on a vehicle. The navigation device 81 is connected to the mobile phone 82. Information transmission between the navigation device 81 and mobile phone 82 may be made using a short distance wireless communication scheme such as the above mentioned Bluenote. The navigation device 81 includes a GPS device 88 and a control circuit 89, and the GPS device 88 can detect a current location of the vehicle. The navigation device 81 also includes a DVD-ROM drive 84 for reading data (map data) recorded in the DVD-ROM 83 so that it can read from DVD-ROM 83 map data including the current vehicle location or map data of a desired area decided by the user operating the operation unit 86, and display a map of the map data in the screen 87.

The communication relay device 72 is owned by an enterprise of the mobile phone 82, i.e., a telephone company. A user of the navigation terminal device 71 contracts the telephone company regarding use of the mobile telephone 82. Since complementary map data of the map data is packet transmitted, an amount of packet transmission is subjected to the charging by the telephone company.

Like the above described music data, the map data is divided into an incomplete map file and a complementary map file with respect to each of a plurality of areas (each area is a box of a map mesh or grid) by the simple skipping scheme or random number scheme, and CD-ROM including incomplete map files for the areas is distributed. A user terminal device has a complementary map file of a desired area transmitted from the information administration server and combines it to the incomplete map file to reconstruct an original map file.

The map data can also be treated as described below.

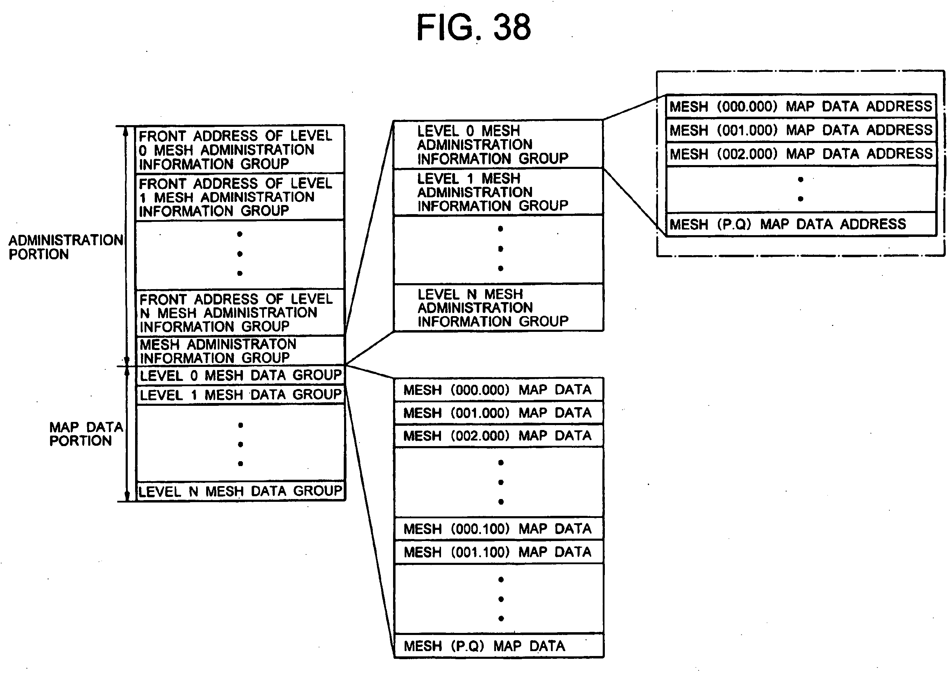

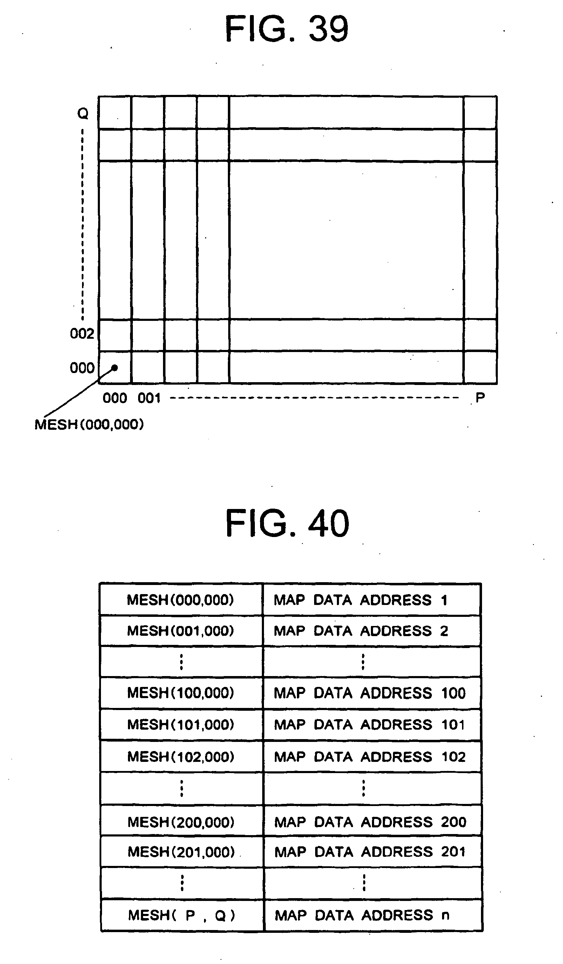

As illustrated in Figure 37, the map data has a structure comprised of an administration portion and a map data portion. A map data including the administration portion and map data portion is a complete map data. The map data portion records map data representing respective map meshes. Specifically, as shown in Figure 38, the administration portion is divided into a level 0 mesh data group, a level 1 mesh data group, **... .** Each mesh data group includes a plurality of map data. The number of the meshes is the number of the map data in the mesh data group. Each mesh represents an area resulting from dividing a map such as a map of Japan into a grid after enlarging, as shown in Figure 39. The administration portion includes, as shown in Figure 38, address regions representing front addresses of the respective mesh administration information, and a mesh administration information group representing the respective mesh administration information. The mesh (map) data address of the administration information group is information indicating at which location the mesh is recorded in DVD-ROM 83. If the mesh data address is unknown, a desired map data cannot be read from DVD-ROM 83. The mesh data address (content surrounded by the single-dot chain line in Figure 38) is therefore missing from DVD-ROM 83, and is stored as the complementary map data in a database of a storage device 77 of an information administration server 74. In the storage device 77, stored is a data table indicating the relationship between the mesh numbers and the map data address numbers as shown in Figure 40.

DVD-ROM 83 without the mesh map data address that is prepared in the above described manner is distributed free or at an extremely low price. It should be noted that the incomplete map data that does not have the mesh map data address may be recorded in a hard disc (not shown) inside the navigation device 81.

It is also satisfactory that neither a free disc nor hard disc data is provided when the navigation device 81 is purchased; instead, the incomplete map data is broad distributed at the time of first initialization and recorded in the hard disc. In this case, the current location detected by the GPS device 88 is transmitted to the information administration server of the center, and the incomplete map data of an area including the current location is sent to the navigation terminal device 71 from the information administration server.

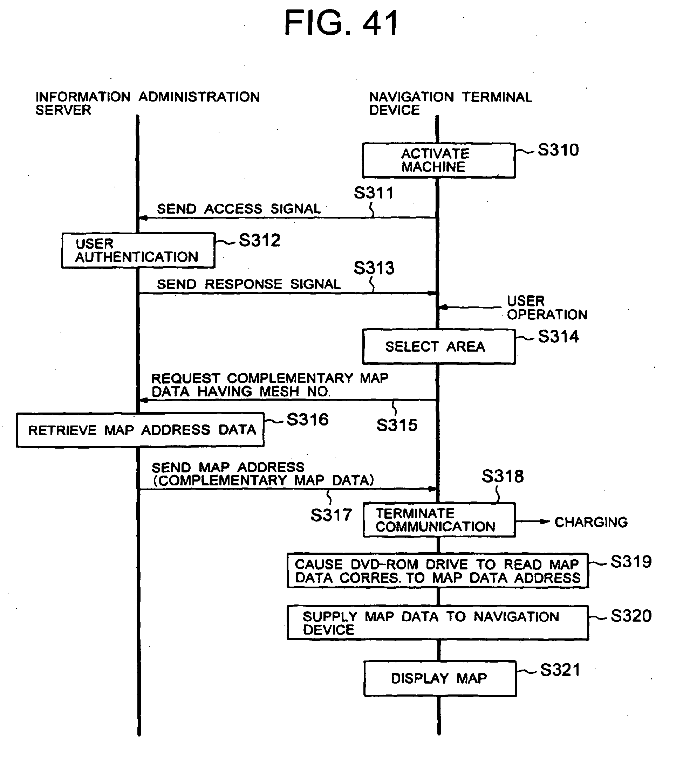

Referring to Figure 41, as the navigation terminal device 71 is activated (Step S310), the mobile phone 82 sends an access signal to the information administration server 74 (Step S311). The access signal reaches the communication relay device 72 as the wireless signal, becomes a wire signal and advances to the information administration server 74 via the gateway device 73 and internet 76. When transmitted from the information administration server 74 to the navigation terminal device 71, the signal proceeds the above route in the opposite direction.

When the information administration server 74 receives the access signal, it performs user authentication (Step S312). If the received access signal is an access signal from a registered user, the information administration server issues a response signal to the navigation terminal device 71 (Step S313). If the information providing service is only available to pre-registered users, a user identification data needed for user authentication is included in the access signal. If the information providing service is available to unnamed persons, the user authentication at Step S312 is dispensed with.

After the navigation terminal device 71 receives the response signal, an area is selected in accordance with the operation conducted at the operation unit 86 (Step S314). This area selection is made by, for example, entering a latitude and a longitude, a station name, or a town name. The mobile phone 82 transmits to the information administration server 82 a request for the complementary map data having the mesh number of the selected area (Step S315).

As the information administration server 74 receives the complementary map data request, it retrieves and reads the map data address corresponding to the mesh number indicated by the complementary map data request from the database of the storage device 77 (Step S316). The map data address is then sent to the navigation terminal device 71 from the information administration server 74 as the complementary map data (Step S317).

As the navigation terminal device 71 receives the complementary map data, the mobile phone 82 terminates the communication (Step S318). Upon termination of the communication, the telephone company starts the charging operation. Although not shown, a request for cooperation fee transfer may be made to a bank account of a company that distributes the free DVD-ROM or the like.

The navigation terminal device then instructs the DVD-ROM drive 84 to read the map data corresponding to the map data address indicated by the received complementary map data (Step S319). The DVD-ROM drive 84 reads the map data of the area specified by the map data address from DVD-ROM 83, and supplies it to the navigation device 81 (Step S320). The display unit 87 displays the map derived from the map data (Step S321).

The relationship between the received map data address and the mesh number is stored in a memory of the navigation device 81.

In order to prevent a third party from illegally utilizing the complementary map data, the complementary map data may have an expiration date or an upper limit number of usage.

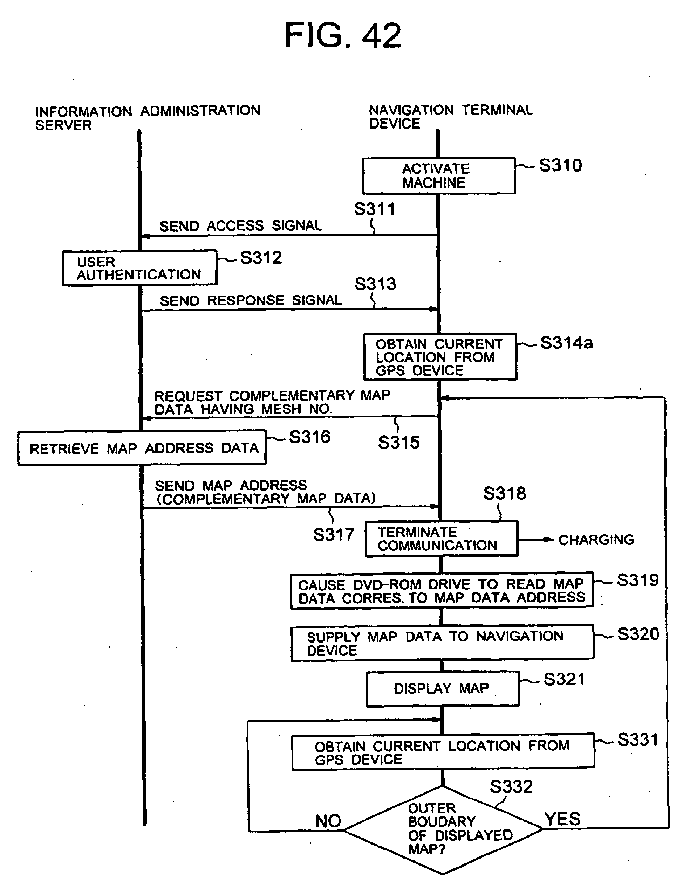

It should be noted that as shown in Figure 42 the current vehicle location may be obtained from the GPS device 88 (Step S314a) instead of Step S314, and the complementary map data corresponding to the mesh number of the area including the current vehicle location may be sent to the information administration server 74 at Step S315.

In case of Figure 42, the control circuit 89 of the navigation device 81 determines whether the current vehicle location reaches the outer boundary of the displayed map as the vehicle further moves (Step S331). If so, the program may return to Step S315 to repeat the above described procedure to obtain another map data, which is suitable for displaying the current vehicle location in the displayed map, from the information administration server 74.

After Step S321, the program may return to Step S314 upon elapsing of a predetermined period to newly acquire a suitable map data from the information administration server 74 to indicate the current vehicle position in the displayed map.

When the information administration server 74 receives the complementary map data request, Step S316 may retrieve not only the map data address corresponding to the mesh number carried with the complementary map data request but also map data addresses corresponding to mesh numbers before and after the mesh number from the database of the storage device 77. Step S317 may send these map data addresses to the navigation terminal device 71 from the information administration server 74 as the complementary map data.

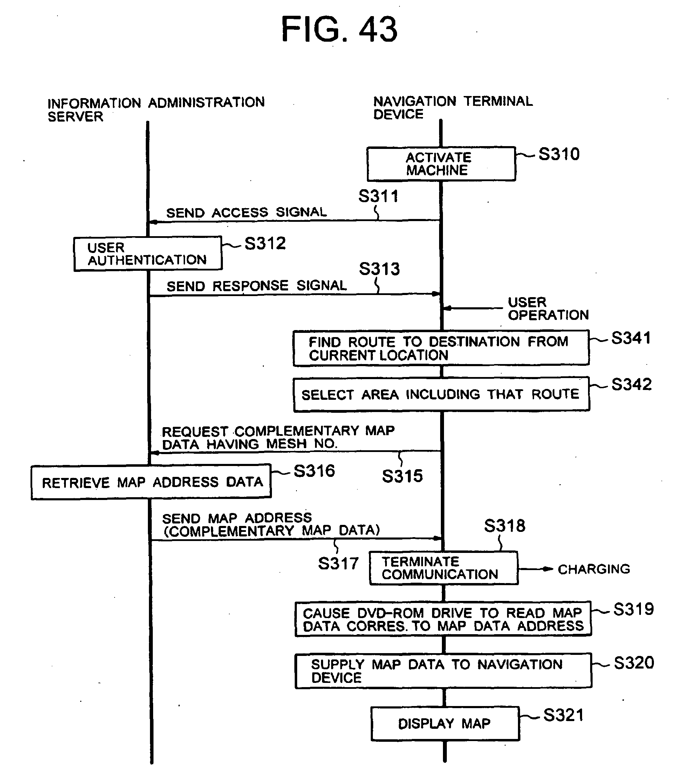

The navigation terminal device 71 may operate as shown in Figure 43 after it receives the response signal. Specifically, the control circuit 89 of the navigation module 81 retrieves a route from the current vehicle location to a desired destination in accordance with the operation made to the operation unit 86 by the user (Step S341) and selects at least one area including that route (Step S342). After Step S342, the program proceeds to Step S315 so that the mobile phone 82 transmits to the information administration server 74 a request for the complementary map data corresponding to the mesh number of the selected area.

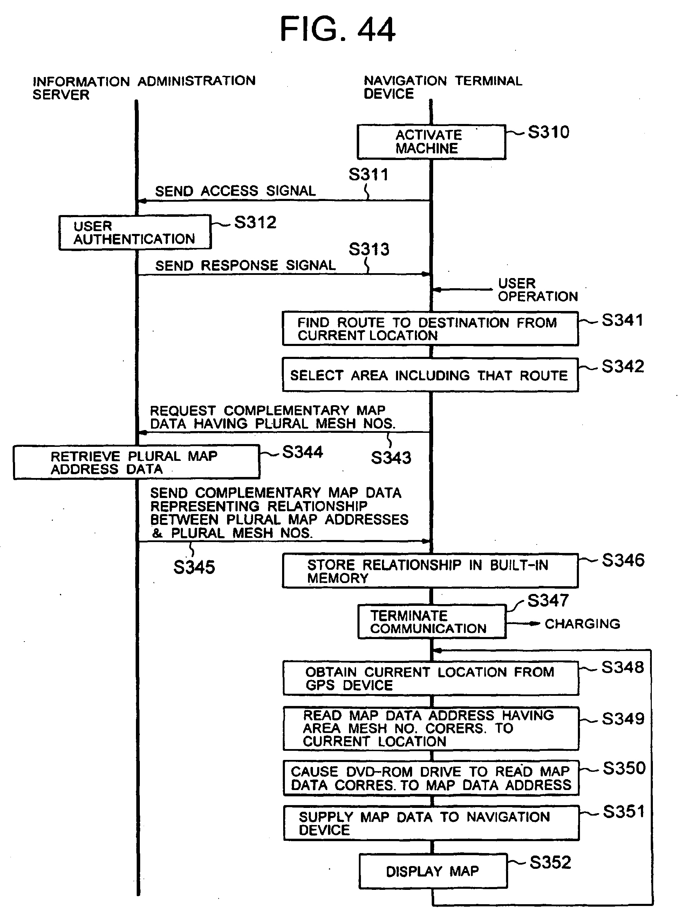

In case of Figure 43, if a plurality of areas are selected at Step S342, a request for complementary map data representing the relationship between a plurality of mesh numbers and a plurality of map data addresses is sent at Step S343 as shown in Figure 44. As the information administration server 74 receives the complementary map data request, it reads a plurality of map data addresses corresponding to a plurality of mesh numbers indicated by the complementary map data request from the database of the storage device 77 at Step S344. The information administration server 74 transmits the relationship between these map data addresses and mesh numbers to the navigation terminal device 71 as the complementary map data at Step S345.

When the navigation terminal device 71 receives the complementary map data representing the relationship between the mesh numbers and map data addresses, it stores this relationship in a built-in memory of the navigation device 81 (Step S346), and the mobile phone 83 discontinues the communication (Step S347). The navigation terminal device then obtains the vehicle current location from the GPS device (Step S348), reads the map data address corresponding to the mesh number allotted to the area including the current location from the built-in memory (Step S349), and instructs the DVD-ROM drive 84 to read the map data specified by the map data address (Step S350). The DVD-ROM drive 84 reads the map data of the area specified by the map data address from DVD-ROM 83 and feeds it to the navigation module 81 (Step S351). The display unit 87 displays the map together with the current vehicle location based on the map data (Step S352). After that, Steps S348 to S352 are repeated.

As understood from the foregoing, there is an advantage that a user is only required to purchase necessary map data if the present invention is applied to the navigation system.

It should be noted that the complete information data is referred to as the complete music data or the complete map data, and the complete information file derived from the complete information data is referred to as the complete music file or the complete map file in the above described embodiments. Further, the incomplete information data is referred to as the incomplete music data or the incomplete map data, and the incomplete information file derived from the incomplete information data is referred to as the incomplete music file or the incomplete map file. Likewise, the complementary information data is referred to as the complementary music data or the complementary map data, and the complementary information file derived from the complementary information data is referred to as the complementary music file or the complementary map file.

As described above, the present invention does not require a long time in downloading the information data such as music and image even if the information data size is large. A user therefore does not feel stresses in downloading. This also promotes the information data purchasing.

## Claims

1. An information providing system comprising:
a terminal device (3) capable of reading information data recorded in a storage medium (8) that has recorded incomplete information data, the incomplete information data being prepared by missing out partial data from complete information data adapted to provide complete information; and
an information administration device (1) for storing complementary information data which is transmittable between the terminal device (3) and the information administration device (1) to complement the incomplete information data thereby reconstructing an original information data,
wherein the terminal device (3) includes
reception means for receiving the complementary information data by way of data transmission from the information administration device (1),
readout means for reading the incomplete information data from the storage medium (8), and
combine means for combining the complementary information data received by the reception means with the incomplete information data read by the readout means,
**characterized in that**,
the terminal device (3) includes transmit means for transmitting user financial information to the information administration device (1),
the information administration device (1) includes charging means for performing a charging operation for transmitting of the complementary information data to the terminal device in response to the financial information from the terminal device (3),
the terminal device (3) includes transmit means for transmitting a notice of data combine completion to the information administration device (1) after the combine means completes the data combine operation, and
the charging means of the information administration device (1) performs the charging operation after the information administration device (1) receives the notice of data combine completion.

2. The information providing system according to claim 1, wherein the terminal device (3) includes replay means for performing a replay operation in accordance with data combined by the combine means.

3. The information providing system according to claim 1 or 2, wherein
the storage medium (8) records a plurality of incomplete information data,
the terminal device (3) includes
selection means for selecting at least one incomplete information data from the plurality of incomplete information data recorded in the storage medium (8) in response to an operation made by a user, and
terminal transmission means for transmitting a request signal that requests the information administration device (1) to send complementary information data corresponding to the at least one incomplete information data selected by the selection means, and
the information administration device (1) includes
storage means (7) for storing a plurality of complementary information data corresponding to the plurality of incomplete information data respectively,
retrieval and readout means for retrieving and reading complementary information data from the plurality of complementary information data stored in the storage means (7) in response to the request signal, and
information transmitting means for transmitting the complementary information data read from the retrieval and readout means to the terminal device (3).

4. The information providing system according to any of claims 1 to 3, wherein the user financial information is credit card information.

5. The information providing system according to claim 1, wherein
the storage medium (8) is assigned a serial number representing a distribution source of the storage medium (8),
the terminal device (3) includes means for transmitting the serial number assigned to the storage medium (8) to the information administration device (1), and
the information administration device (1) includes payment treating means for performing a payment treatment on a cooperation money which is paid to the distribution source in return to the complementary information data transmission to the terminal device (3) in accordance with to the serial number transmitted from the terminal device (3).

6. The information providing system according to claim 5, wherein
the terminal device (3) includes means for transmitting a notice of data combine completion to the information administration device after the combine means completes the data combine operation, and
the payment treating means of the information administration device performs the cooperation money payment treatment after the information administration device receives the notice of data combine completion.

7. The information providing system according to claim 1 or 3, wherein
the storage medium (8) records incomplete music data of songs as the incomplete information data such that the incomplete music data has incomplete music files for the respective songs,
the storage means (7) records complementary music files corresponding to the incomplete music files for the respective songs as the plurality of complementary information data,
the combine means combines the incomplete music file with the complementary music file to create a complete music file, and
the terminal device (3) includes replay means for replaying a song in accordance with the complete music file created by the combine means.

8. The information providing system according to claim 7, wherein the terminal device (3) includes trial listening means for causing the replay means to replay the songs using the corresponding incomplete music files for a trial listening purpose.

9. The information providing system according to claim 7, wherein
the storage medium (8) stores music files of the respective songs for a trial listening purpose, and
the terminal device (3) includes trial listening means for causing the replay means to replay the songs using the corresponding music files for the trial listening purpose.

10. The information providing system according to claim 7, wherein the terminal device (3) includes display means for displaying a list of songs contained in each of the incomplete music files recorded in the storage medium (8).

11. The information providing system according to claim 10, wherein the list of the songs is recorded as data in the storage medium (8).

12. The information providing system according to claim 10, wherein the terminal device (3) accesses the information administration device (1) to receive and obtain the list of the songs from the information administration device (1).

13. The information providing system according to claim 1 or 3, wherein
the storage medium (8) stores map data of a plurality of areas as the incomplete information data,
the storage means (7) stores map data addresses corresponding to the map data for the respective areas as the plurality of complementary information data,
the combine means creates a map data file by combining the map data of a desired area with the corresponding map data address, and
the terminal device displays a map of the desired area on the basis of the map data file created by the combine means.

14. The information providing system according to claim 13, wherein the terminal device (3) includes a navigation device (81) installed on a vehicle for detecting a current location of the vehicle, and displays a map corresponding to the current location of the vehicle detected by the navigation device (81).

15. The information providing system according to claim 13, wherein the terminal device (3) includes a navigation device (81) installed on a vehicle for detecting a current location of the vehicle, and displays a map from the current location of the vehicle detected by the navigation device (81) to a destination.

16. An information administration device (1) comprising:
storage means (7) for storing complementary information data to reconstruct original complete information data by complementing incomplete information data obtained as a result of partly omitting the complete information data designed to provide complete information;
reception means for receiving a signal requesting the complementary information data;
transmission means for reading the complementary information data from the storage means and transmitting it to a sender of the request signal when the reception means receives the request signal; and
**characterized by**
charging means for performing a charging operation in response to a notice of data combine completion.

17. A terminal device (3) comprising:
storage medium reproducing means for reading information data recorded in a storage medium (8) that has recorded incomplete information data obtained by partly omitting complete information data designed to provide complete information;
reception means for receiving complementary information data to complement the incomplete information data thereby reconstructing original complete information data; and
combine means for combining the incomplete information data read from the storage medium reproducing means with the complementary information data received by the reception means to reconstruct the original complete information data,
**characterized in that**
the combine means produces a notice of data combine completion upon completion of the reconstruction.

18. An information providing method for use in the system as claimed in any one of claims 1 to 14 comprising the steps of:
reading information data recorded in the storage medium (8) that has recorded incomplete information data obtained by partly omitting complete information data adapted to provide complete information, and
storing complementary information data transmittable between the terminal device (3) and the information administration device (1) to complement the incomplete information data thereby reconstructing original information data, wherein the terminal device (3) receives the complementary information data by way of data transmission from the information administration device (1), reads the incomplete information data from the storage medium (8), and combines the received complementary information data with the read incomplete information data,
**characterized in that**
the terminal device (3) transmitting user financial information to the information administration device (1),
the information administration device (1) performing a charging operation for transmitting of the complementary information data to the terminal device in response to the financial information from the terminal device (3),
the terminal device (3) transmitting a notice of data combine completion to the information administration device (1) after the combine means completes the data combine operation, and
the information administration device (1) performing the charging operation after the information administration device (1) receives the notice of data combine completion.

19. An information providing method for use in the information administration device (1) as claimed in claim 16 comprising the steps of:
storing complementary information data to reconstruct original complete information data by complementing incomplete information data obtained by partly omitting complete information data designed to provide complete information;
transmitting the recorded complementary information data to a sender of a signal requesting the complementary information data upon receiving such a signal, and
**characterized by**
performing a charging operation in response to a notice of data combine completion.

20. A method for use in the terminal device (3) as claimed in claim 17 comprising the steps of:
reading information data recorded in the storage medium (8) that has recorded incomplete information data obtained by partly omitting complete information data designed to provide complete information,
reconstructing original complete information data when complementary information data is received to complement the incomplete information data thereby by combining the incomplete information data read from the storage medium reproducing means with the received complementary information data, and
**characterized by**
producing a notice of data combine completion upon completion of the reconstruction.

## Patentansprüche

1. Informationsbereitstellungssystem, umfassend:
eine Endgeräteinrichtung (3), die Informationsdaten lesen kann, die in einem Speichermedium (8) aufgezeichnet wurden, das unvollständige Informationsdaten aufgezeichnet hat, wobei die unvollständigen Informationsdaten durch Auslassen von Teildaten von vollständigen Informationsdaten erstellt werden, die geeignet sind, um eine vollständige Information bereitzustellen; und
eine Informationsverwaltungseinrichtung (1) zum Speichern von ergänzenden Informationsdaten, die zwischen der Endgeräteinrichtung (3) und der Informationsverwaltungseinrichtung (1) übertragen werden können, um die unvollständigen Informationsdaten zu ergänzen und auf diese Weise ursprüngliche Informationsdaten zu rekonstruieren,
wobei die Endgeräteinrichtung (3) umfasst:
ein Empfangsmittel zum Empfangen der ergänzenden Informationsdaten mittels einer Datenübertragung von der Informationsverwaltungseinrichtung (1),
ein Auslesemittel zum Lesen der unvollständigen Informationsdaten aus dem Speichermedium (8) und
ein Kombinationsmittel zum Kombinieren der durch das Empfangsmittel empfangenen ergänzenden Informationsdaten mit den durch das Auslesemittel gelesenen unvollständigen Informationsdaten,
**dadurch gekennzeichnet, dass**
die Endgeräteinrichtung (3) ein Übertragungsmittel zum Übertragen einer Benutzerfinanzinformation an die Informationsverwaltungseinrichtung (1) umfasst,
die Informationsverwaltungseinrichtung (1) ein Abrechnungsmittel zum Durchführen einer Abrechnungsoperation zum Übertragen der ergänzenden Informationsdaten an die Endgeräteinrichtung in Ansprechen auf die Finanzinformation von der Endgeräteinrichtung (3) umfasst,
die Endgeräteinrichtung (3) ein Übertragungsmittel zum Übertragen einer Mitteilung eines Datenkombinationsabschlusses an die Informationsverwaltungseinrichtung (1) nach dem Abschließen der Datenkombinationsoperation durch das Kombinationsmittel umfasst, und
das Abrechnungsmittel der Informationsverwaltungseinrichtung (1) die Abrechnungsoperation durchführt, nachdem die Informationsverwaltungseinrichtung (1) die Mitteilung eines Datenkombinationsabschlusses empfängt.

2. Informationsbereitstellungssystem nach Anspruch 1, wobei die Endgeräteinrichtung (3) ein Wiedergabemittel zum Durchführen einer Wiedergabeoperation gemäß durch das Kombinationsmittel kombinierten Daten umfasst.

3. Informationsbereitstellungssystem nach Anspruch 1 oder 2, wobei das Speichermedium (8) mehrere unvollständige Informationsdaten aufzeichnet,
wobei die Endgeräteinrichtung (3) umfasst:
ein Auswahlmittel zum Auswählen von mindestens einer unvollständigen Informationsdateneinheit aus den mehreren in dem Speichermedium (8) aufgezeichneten unvollständigen Informationsdaten in Ansprechen auf eine durch einen Benutzer durchgeführte Operation, und
ein Endgerätübertragungsmittel zum Übertragen eines Aufforderungssignals, das die Informationsverwaltungseinrichtung (1) auffordert, ergänzende Informationsdaten, die der mindestens einen durch das Auswahlmittel ausgewählten unvollständigen Informationsdateneinheit entsprechen, zu senden, und
wobei die Informationsverwaltungseinrichtung (1) umfasst:
ein Speichermittel (7) zum Speichern mehrerer ergänzender Informationsdaten, die jeweils den mehreren unvollständigen Informationsdaten entsprechen,
ein Abruf und Auslesemittel zum Abrufen und Lesen von ergänzenden Informationsdaten von den mehreren in dem Speichermittel (7) gespeicherten ergänzenden Informationsdaten in Ansprechen auf das Aufforderungssignal, und
ein Informationsübertragungsmittel zum Übertragen der von dem Abruf- und Auslesemittel gelesenen ergänzenden Informationsdaten an die Endgeräteinrichtung (3).

4. Informationsbereitstellungssystem nach einem der Ansprüche 1 bis 3, wobei die Benutzerfinanzinformation eine Kreditkarteninformation ist.

5. Informationsbereitstellungssystem nach Anspruch 1, wobei
dem Speichermedium (8) eine Seriennummer zugeordnet ist, die eine Verteilungsquelle des Speichermediums (8) darstellt,
die Endgeräteinrichtung (3) ein Mittel zum Übertragen der dem Speichermedium (8) zugeordneten Seriennummer an die Informationsverwaltungseinrichtung (1) umfasst, und
die Informationsverwaltungseinrichtung (1) ein Bezahlungsbearbeitungsmittel zum Durchführen einer Bezahlungsbearbeitung an einem Kooperationsgeld umfasst, das an die Verteilungsquelle als Gegenleistung für die Übertragung von ergänzenden Informationsdaten an die Endgeräteinrichtung (3) gemäß der von der Endgeräteinrichtung (3) übertragenen Seriennummer bezahlt wird.

6. Informationsbereitstellungssystem nach Anspruch 5, wobei
die Endgeräteinrichtung (3) ein Mittel zum Übertragen einer Mitteilung eines Datenkombinationsabschlusses an die Informationsverwaltungseinrichtung nach dem Abschluss der Datenkombinationsoperation durch das Kombinationsmittel umfasst, und
das Bezahlungsbearbeitungsmittel der Informationsverwaltungseinrichtung die Kooperationsgeld-Bezahlungsbearbeitung durchführt, nachdem die Informationsverwaltungseinrichtung die Mitteilung eines Datenkombinationsabschlusses empfängt.

7. Informationsbereitstellungssystem nach Anspruch 1 oder 3, wobei
das Speichermedium (8) unvollständige Musikdaten von Liedern als die unvollständigen Informationsdaten derart aufzeichnet, dass die unvollständigen Musikdaten unvollständige Musikdateien für die jeweiligen Lieder umfassen,
das Speichermittel (7) ergänzende Musikdateien, die den unvollständigen Musikdateien für die jeweiligen Lieder entsprechen, als die mehreren ergänzenden Informationsdaten aufzeichnet,
das Kombinationsmittel die unvollständige Musikdatei mit der ergänzenden Musikdatei kombiniert, um eine vollständige Musikdatei zu erzeugen, und
die Endgeräteinrichtung (3) ein Wiedergabemittel zum Wiedergeben eines Lieds gemäß der durch das Kombinationsmittel erzeugten vollständigen Musikdatei umfasst.

8. Informationsbereitstellungssystem nach Anspruch 7, wobei die Endgeräteinrichtung (3) ein Testhörmittel umfasst, um zu bewirken, dass das Wiedergabemittel die Lieder unter Verwendung der entsprechenden unvollständigen Musikdateien für einen Testhörzweck wiedergibt.

9. Informationsbereitstellungssystem nach Anspruch 7, wobei
das Speichermedium (8) Musikdateien der jeweiligen Lieder für einen Testhörzweck speichert, und
die Endgeräteinrichtung (3) ein Testhörmittel umfasst, um zu bewirken, dass das Wiedergabemittel die Lieder unter Verwendung der entsprechenden Musikdateien für den Testhörzweck wiedergibt.

10. Informationsbereitstellungssystem nach Anspruch 7, wobei die Endgeräteinrichtung (3) ein Anzeigemittel zum Anzeigen einer Liste von Liedern umfasst, die in jeder der in dem Speichermedium (8) aufgezeichneten unvollständigen Musikdateien enthalten sind.

11. Informationsbereitstellungssystem nach Anspruch 10, wobei die Liste der Lieder in dem Speichermedium (8) als Daten aufgezeichnet ist.

12. Informationsbereitstellungssystem nach Anspruch 10, wobei die Endgeräteinrichtung (3) auf die Informationsverwaltungseinrichtung (1) zugreift, um die Liste der Lieder von der Informationsverwaltungseinrichtung (1) zu empfangen und zu erhalten.

13. Informationsbereitstellungssystem nach Anspruch 1 oder 3, wobei
das Speichermedium (8) Kartendaten mehrerer Bereiche als die unvollständigen Informationsdaten speichert,
das Speichermittel (7) Kartendatenadressen, die den Kartendaten für die jeweiligen Bereiche entsprechen, als die mehreren ergänzenden Informationsdaten speichert,
das Kombinationsmittel eine Kartendatendatei erzeugt, indem die Kartendaten eines gewünschten Bereichs mit der entsprechenden Kartendatenadresse kombiniert werden, und
die Endgeräteinrichtung eine Karte des gewünschten Bereichs auf der Grundlage der durch das Kombinationsmittel erzeugten Kartendatendatei anzeigt.

14. Informationsbereitstellungssystem nach Anspruch 13, wobei die Endgeräteinrichtung (3) eine in einem Fahrzeug zum Detektieren eines momentanen Orts des Fahrzeugs eingebaute Navigationseinrichtung (81) umfasst, die eine Karte anzeigt, die dem durch die Navigationseinrichtung (81) detektierten momentanen Ort des Fahrzeugs entspricht.

15. Informationsbereitstellungssystem nach Anspruch 13, wobei die Endgeräteinrichtung (3) eine in einem Fahrzeug zum Detektieren eines momentanen Orts des Fahrzeugs eingebaute Navigationseinrichtung (81) umfasst, die eine Karte von dem durch die Navigationseinrichtung (81) detektierten momentanen Ort des Fahrzeugs zu einem Ziel anzeigt.

16. Informationsverwaltungseinrichtung (1), umfassend:
ein Speichermittel (7) zum Speichern von ergänzenden Informationsdaten, um ursprüngliche vollständige Informationsdaten zu rekonstruieren, indem unvollständige Informationsdaten ergänzt werden, die als ein Ergebnis eines teilweisen Weglassens der vollständigen Informationsdaten erhalten werden, die entworfen sind, um eine vollständige Information bereitzustellen;
ein Empfangsmittel zum Empfangen eines Signals, das die ergänzenden Informationsdaten anfordert;
ein Übertragungsmittel zum Lesen der ergänzenden Informationsdaten von dem Speichermittel und Übertragen dieser an einen Sender des Aufforderungssignals, wenn das Empfangsmittel das Aufforderungssignal empfängt; und
**gekennzeichnet durch**
ein Abrechnungsmittel zum Durchführen einer Abrechnungsoperation in Ansprechen auf eine Mitteilung eines Datenkombinationsabschlusses.

17. Endgeräteinrichtung (3), umfassend:
ein Speichermediumreproduktionsmittel zum Lesen von Informationsdaten, die in einem Speichermedium (8) aufgezeichnet wurden, das unvollständige Informationsdaten aufgezeichnet hat, die durch teilweises Weglassen von vollständigen Informationsdaten erhalten werden, die entworfen sind, um eine vollständige Information bereitzustellen;
ein Empfangsmittel zum Empfangen von ergänzenden Informationsdaten, um die unvollständigen Informationsdaten zu ergänzen, wodurch ursprüngliche vollständige Informationsdaten rekonstruiert werden; und
ein Kombinationsmittel zum Kombinieren der von dem Speichermediumreproduktionsmittel gelesenen unvollständigen Informationsdaten mit den durch das Empfangsmittel empfangenen ergänzenden Informationsdaten, um die ursprünglichen vollständigen Informationsdaten zu rekonstruieren,
**dadurch gekennzeichnet, dass**
das Kombinationsmittel bei einem Abschluss der Rekonstruktion eine Mitteilung eines Datenkombinationsabschlusses erzeugt.

18. Informationsbereitstellungsverfahren zur Verwendung in dem System nach einem der Ansprüche 1 bis 14, das die Schritte umfasst, dass
Informationsdaten gelesen werden, die in dem Speichermedium (8) aufgezeichnet wurden, das unvollständige Informationsdaten aufgezeichnet hat, die durch teilweises Weglassen von vollständigen Informationsdaten erhalten werden, die geeignet sind, um eine vollständige Information bereitzustellen, und
ergänzende Informationsdaten gespeichert werden, die zwischen der Endgeräteinrichtung (3) und der Informationsverwaltungseinrichtung (1) übertragen werden können, um die unvollständigen Informationsdaten zu ergänzen, wodurch ursprüngliche Informationsdaten rekonstruiert werden, wobei die Endgeräteinrichtung (3) die ergänzenden Informationsdaten mittels einer Datenübertragung von der Informationsverwaltungseinrichtung (1) empfängt, die unvollständigen Informationsdaten aus dem Speichermedium (8) liest und die empfangenen ergänzenden Informationsdaten mit den gelesenen unvollständigen Informationsdaten kombiniert,
**dadurch gekennzeichnet, dass**
die Endgeräteinrichtung (3) eine Benutzerfinanzinformation an die Informationsverwaltungseinrichtung (1) überträgt,
die Informationsverwaltungseinrichtung (1) eine Abrechnungsoperation zum Übertragen der ergänzenden Informationsdaten an die Endgeräteinrichtung in Ansprechen auf die Finanzinformation von der Endgeräteinrichtung (3) durchführt,
die Endgeräteinrichtung (3) nach dem Abschluss der Datenkombinationsoperation durch das Kombinationsmittel eine Mitteilung eines Datenkombinationsabschlusses an die Informationsverwaltungseinrichtung (1) überträgt, und
die Informationsverwaltungseinrichtung (1) die Abrechnungsoperation durchführt, nachdem die Informationsverwaltungseinrichtung (1) die Mitteilung eines Datenkombinationsabschlusses empfängt.

19. Informationsbereitstellungsverfahren zur Verwendung bei der Informationsverwaltungseinrichtung (1) nach Anspruch 16, das die Schritte umfasst, dass
ergänzende Informationsdaten gespeichert werden, um ursprüngliche vollständige Informationsdaten zu rekonstruieren, indem unvollständige Informationsdaten ergänzt werden, die durch teilweises Weglassen von vollständigen Informationsdaten erhalten werden, die entworfen sind, um eine vollständige Information bereitzustellen;
die aufgezeichneten ergänzenden Informationsdaten an einen Sender eines Signals, das die ergänzenden Informationsdaten anfordert, bei einem Empfang solch eines Signals übertragen werden, und
**dadurch gekennzeichnet, dass**
eine Abrechnungsoperation in Ansprechen auf eine Mitteilung eines Datenkombinationsabschlusses durchgeführt wird.

20. Verfahren zur Verwendung bei der Endgeräteinrichtung (3) nach Anspruch 17, das die Schritte umfasst, dass
Informationsdaten gelesen werden, die in dem Speichermedium (8) aufgezeichnet wurden, das unvollständige Informationsdaten aufgezeichnet hat, die durch teilweises Weglassen von vollständigen Informationsdaten erhalten werden, die entworfen sind, um eine vollständige Information bereitzustellen,
ursprüngliche vollständige Informationsdaten rekonstruiert werden, wenn ergänzende Informationsdaten empfangen werden, um die unvollständigen Informationsdaten zu ergänzen, wodurch die aus dem Speichermediumreproduktionsmittel gelesenen unvollständigen Informationsdaten mit den empfangenen ergänzenden Informationsdaten kombiniert werden, und
**dadurch gekennzeichnet, dass**
eine Mitteilung eines Datenkombinationsabschlusses bei einem Abschluss der Rekonstruktion erzeugt wird.

## Revendications

1. Système fournisseur d'informations comprenant :
un dispositif terminal (3) capable de lire des données d'informations enregistrées sur un support d'enregistrement (8) sur lequel sont enregistrées des données d'informations incomplètes, les données d'informations incomplètes étant préparées en laissant de côté des données partielles parmi des données d'informations complètes aptes à fournir des informations complètes ; et
un dispositif d'administration d'informations (1) pour stocker des données d'informations complémentaires qui sont transmissibles entre le dispositif terminal (3) et le dispositif d'administration d'informations (1) afin de compléter les données incomplètes pour ainsi reconstruire des données d'informations originales,
dans lequel le dispositif terminal (3) comprend
un moyen de réception pour recevoir les données d'informations complémentaires par l'intermédiaire de la transmission de données en provenance du dispositif d'administration d'informations (1),
un moyen de lecture pour lire les données d'informations incomplètes depuis le support de stockage (8), et
un moyen de combinaison pour combiner des données d'informations complémentaires reçues par le moyen de réception avec les données d'informations incomplètes lues par le moyen de lecture,
**caractérisé en ce que**
le dispositif terminal (3) comprend un moyen de transmission pour transmettre des informations financières d'utilisateurs au dispositif d'administration d'informations (1),
le dispositif d'administration d'informations (1) comprend un moyen de rechargement pour effectuer une opération de rechargement destinée à transmettre les données d'informations complémentaires au dispositif terminal en réponse aux informations financières provenant du dispositif terminal (3),
le dispositif terminal (3) comprend un moyen de transmission pour transmettre une indication de fin de combinaison des données au dispositif d'administration d'informations (1) après que le moyen de combinaison a fini l'opération de combinaison de données, et
le moyen de rechargement du dispositif d'administration d'informations (1) effectue l'opération de rechargement après que le dispositif d'administration d'informations (1) a reçu l'indication de fin de combinaison des données.

2. Système fournisseur d'informations selon la revendication 1, dans lequel le dispositif terminal (3) comprend un moyen de relecture pour effectuer une opération de relecture en conformité avec des données combinées par le moyen de combinaison.

3. Système fournisseur d'informations selon la revendication 1 ou 2, dans lequel
le moyen de stockage (8) enregistre une pluralité de données d'informations incomplètes,
le dispositif terminal (3) comprend
un moyen de sélection pour sélectionner au moins une donnée d'information incomplète parmi la pluralité de données d'informations incomplètes enregistrées sur le support de stockage (8) en réponse à une opération effectuée par un utilisateur, et
un moyen de transmission de terminal pour transmettre un signal de demande qui demande au dispositif d'administration d'information (1) d'envoyer des données d'informations complémentaires correspondant à l'au moins une donnée d'information incomplète sélectionnée par le moyen de sélection, et
le dispositif d'administration d'informations (1) comprend
un moyen de stockage (7) pour stocker une pluralité de données d'informations complémentaires correspondant respectivement à la pluralité de données d'informations incomplètes,
un moyen d'extraction et de lecture pour extraire et lire des données d'informations complémentaires parmi la pluralité de données d'informations complémentaires stockées sur le moyen de stockage (7) en réponse au signal de demande, et
un moyen de transmission d'informations pour transmettre les données d'informations complémentaires lues par le moyen d'extraction et de lecture au dispositif terminal (3).

4. Système fournisseur d'informations selon l'une quelconque des revendications 1 à 3, dans lequel les informations financières d'utilisateurs sont des informations de carte de crédit.

5. Système fournisseur d'informations selon la revendication 1, dans lequel
on affecte au support de stockage (8) un numéro de série représentant une source de distribution du support de stockage (8),
le dispositif terminal (3) comprend un moyen pour transmettre le numéro de série affecté au support de stockage (8) au dispositif d'administration d'informations (1), et
le dispositif d'administration d'informations (1) comprend un moyen de traitement de paiement pour effectuer un traitement de paiement sur un montant de coopération qui est payé à la source de distribution en échange de la transmission de données d'informations complémentaires au dispositif terminal (3) en conformité avec le numéro de série transmis par le dispositif terminal (3).

6. Système fournisseur d'informations selon la revendication 5, dans lequel
le dispositif terminal (3) comprend un moyen pour transmettre une indication de fin de combinaison des données au dispositif d'administration d'informations après que le moyen de combinaison a fini l'opération de combinaison de données, et
le moyen de traitement de paiement du dispositif d'administration d'informations effectue le traitement de paiement du montant de coopération après que le dispositif d'administration d'informations a reçu l'indication de fin de combinaison des données.

7. Système fournisseur d'informations selon la revendication 1 ou 3, dans lequel
le support de stockage (8) enregistre des données de morceaux de musique incomplets en tant que données d'informations incomplètes de façon que les données de musique incomplètes aient des fichiers de musique incomplets pour les morceaux respectifs,
le moyen de stockage (7) enregistre des fichiers de musique complémentaires correspondant aux fichiers de musique incomplets pour les morceaux respectifs en tant que pluralité de données d'informations complémentaires,
le moyen de combinaison combine le fichier de musique incomplet au fichier de musique complémentaire pour créer un fichier de musique complet, et
le dispositif terminal (3) comprend un moyen de relecture pour relire un morceau en conformité avec le fichier de musique complet créé par le moyen de combinaison.

8. Système fournisseur d'informations selon la revendication 7, dans lequel le dispositif terminal (3) comprend un moyen de préécoute pour faire en sorte que le moyen de relecture relise les morceaux en utilisant les fichiers de musique incomplets correspondants à des fins de préécoute.

9. Système fournisseur d'informations selon la revendication 7, dans lequel
le support de stockage (8) stocke des fichiers de musique des morceaux respectifs à des fins de préécoute, et
le dispositif terminal (3) comprend un moyen de préécoute destiné à faire en sorte que le moyen de relecture relise les morceaux en utilisant les fichiers de musique correspondants à des fins de préécoute.

10. Système fournisseur d'informations selon la revendication 7, dans lequel le dispositif terminal (3) comprend un moyen d'affichage pour afficher une liste de morceaux contenus dans chacun des fichiers de musique incomplets enregistrés sur le support de stockage (8).

11. Système fournisseur d'informations selon la revendication 10, dans lequel la liste de morceaux est enregistrée en tant que données sur le support de stockage (8).

12. Système fournisseur d'informations selon la revendication 10, dans lequel le dispositif terminal (3) accède au dispositif d'administration d'informations (1) pour recevoir et obtenir la liste de morceaux depuis le dispositif d'administration d'informations (1).

13. Système fournisseur d'informations selon la revendication 1 ou 3, dans lequel:
le support de stockage (8) stocke des données cartographiques d'une pluralité de zones en tant que données d'informations incomplètes,
le moyen de stockage (7) stocke des adresses de données cartographiques correspondant aux données cartographiques pour les zones respectives en tant que pluralité de données d'informations complémentaires,
le moyen de combinaison crée un fichier de données cartographiques en combinant les données cartographiques d'une zone souhaitée à l'adresse des données cartographiques correspondantes, et
le dispositif terminal affiche une carte de la zone souhaitée sur la base du fichier de données cartographiques créé par le moyen de combinaison.

14. Système fournisseur d'informations selon la revendication 13, dans lequel le dispositif terminal (3) comprend un dispositif de navigation (81) installé sur un véhicule pour détecter une position courante du véhicule, et affiche une carte correspondant à la position courante du véhicule détectée par le dispositif de navigation (81).

15. Système fournisseur d'informations selon la revendication 13, dans lequel le dispositif terminal (3) comprend un dispositif de navigation (81) installé sur un véhicule pour détecter une position courante du véhicule, et affiche une carte allant de la position courante du véhicule détectée par le dispositif de navigation (81) jusqu'à une destination.

16. Dispositif d'administration d'informations (1) comprenant:
un moyen de stockage (7) pour stocker des données d'informations complémentaires afin de reconstruire des données d'informations complètes originales en complétant des données d'informations incomplètes obtenues en omettant partiellement les données d'informations complètes aptes à fournir des informations complètes ;
un moyen de réception pour recevoir un signal demandant les données d'informations complémentaires ;
un moyen d'émission pour lire les données d'informations complémentaires depuis le moyen de stockage et les transmettre à un dispositif d'envoi du signal de demande lorsque le moyen de réception reçoit le signal de demande ; et
**caractérisé par**
un moyen de rechargement pour effectuer une opération de rechargement en réponse à une indication de fin de combinaison des données.

17. Dispositif terminal (3) comprenant :
un moyen de reproduction de support de stockage pour lire des données d'informations enregistrées sur un support de stockage (8) sur lequel sont enregistrées des données d'informations incomplètes obtenues en omettant partiellement des données d'informations complètes conçues pour fournir des informations complètes ;
un moyen de réception pour recevoir des données d'informations complémentaires afin de compléter les données d'informations incomplètes pour ainsi reconstruire des données d'informations complètes originales ; et
un moyen de combinaison pour combiner les données d'informations incomplètes lues par le moyen de reproduction de support de stockage avec des données d'informations complémentaires reçues par le moyen de réception afin de reconstruire les données d'informations complètes originales,
**caractérisé en ce que**
le moyen de combinaison produit une indication de fin de combinaison des données à la fin de la reconstruction.

18. Procédé de fourniture d'informations destiné à être utilisé dans le système selon l'une quelconque des revendications 1 à 14, comprenant les étapes consistant à :
lire des données d'informations enregistrées sur le support d'enregistrement (8) sur lequel sont enregistrées des données d'informations incomplètes obtenues en omettant partiellement des données d'informations complètes aptes à fournir des informations complètes, et
stocker des données d'informations complémentaires transmissibles entre le dispositif terminal (3) et le dispositif d'administration d'informations (1) pour compléter les données d'informations incomplètes afin de reconstruire ainsi les données d'informations originales, dans lequel le dispositif terminal (3) reçoit les données d'informations complémentaires par l'intermédiaire d'une transmission de données en provenance du dispositif d'administration d'informations (1), lit les données d'informations incomplètes depuis le support de stockage (8), et combine les données d'informations complémentaires reçues avec les données d'informations incomplètes lues,
**caractérisé en ce que**
le dispositif terminal (3) transmet des informations financières d'utilisateurs au dispositif d'administration d'informations (1),
le dispositif d'administration d'informations (1) effectue une opération de rechargement pour transmettre les données d'informations complémentaires au dispositif terminal en réponse aux informations financières provenant du dispositif terminal (3),
le dispositif terminal (3) transmet une indication de fin de combinaison des données au dispositif d'administration d'informations (1) après que le moyen de combinaison a fini l'opération de combinaison des données, et
le dispositif d'administration d'informations (1) effectue l'opération de rechargement après que le dispositif d'administration d'informations (1) a reçu l'indication de fin de combinaison des données.

19. Procédé de fourniture d'informations destiné à être utilisé dans le dispositif d'administration d'informations (1) selon la revendication 16, comprenant les étapes consistant à :
stocker des données d'informations complémentaires pour reconstruire des données d'informations complètes originales, en complétant les données d'informations incomplètes obtenues en omettant partiellement des données d'informations complètes conçues pour fournir des informations complètes ;
transmettre les données d'informations complémentaires enregistrées à un dispositif d'envoi d'un signal demandant des données d'informations complémentaires lors de la réception de ce signal, et
**caractérisé par** le fait
d'effectuer une opération de rechargement en réponse à une indication de fin de combinaison des données.

20. Procédé destiné à être utilisé dans le dispositif terminal (3) selon la revendication 17, comprenant les étapes consistant à :
lire des données d'informations enregistrées sur le support de stockage (8) sur lequel sont enregistrées des données d'informations incomplètes obtenues en omettant partiellement des données d'informations complètes aptes à fournir des informations complètes,
reconstruire des données d'informations complètes originales lorsque des données d'informations complémentaires sont reçues pour compléter des données d'informations incomplètes afin de combiner ainsi les données d'informations incomplètes lues par le moyen de reproduction de support de stockage avec les données d'informations complémentaires reçues, et
**caractérisé par** le fait de
produire une indication de fin de combinaison des données à la fin de la reconstruction.
